# EUROPÄISCHE PATENTSCHRIFT

(11) **EP 2 998 188 B1**
(45) Veröffentlichungstag und Bekanntmachung des Hinweises auf die Patenterteilung: **07.03.2018**
(21) Anmeldenummer: 15179822.0
(22) Anmeldetag: 05.08.2015
(51) Int. Cl.: B62B 5/00, B60R 11/00

(54) **NUTZFAHRZEUGKABINE MIT MULTIFUNKTIONSBEHÄLTER**
COMMERCIAL VEHICLE CAB WITH MULTI FUNCTION CONTAINER
CABINE DE VEHICULE UTILITAIRE DOTEE DE RECIPIENTS MULTIFONCTION

(30) Priorität: 19.09.2014 DE 102014113604
(43) Veröffentlichungstag der Anmeldung: 23.03.2016
(73) Patentinhaber: GRAMMER AG, 92224 Amberg (DE)
(72) Erfinder: Meyder, Volkhart, 64658 Fürth / Odenwald (DE); Übelacker, Roland, 92536 Pfreimd (DE); Wittmann, Hubert, 92685 Floß (DE); Strohal, Christian, 31118 Braunschweig (DE)
(74) Vertreter: Hannke, Christian

(56) Entgegenhaltungen:
- DE-A1-102004 025 248
- DE-A1-102009 052 693
- US-A- 4 483 653
- US-A1- 2005 264 020

## Beschreibung

Die Erfindung betrifft eine Fahrerkabine eines Nutzfahrzeugs.
Fahrer von Nutzfahrzeugen wie eines Lastkraftwagens (LKW) müssen häufig aufgrund von vorgeschriebenen Ruhezeiten oder aufgrund eines LKW-Wechsels eine Fahrerkabine eines LKWs mit ihrer Ausrüstung neu ausstatten. Hierfür müssen häufig verschiedene Dokumente und PC-Tablets, Nahrungsmittel und Getränke, gegebenenfalls eine Kaffeemaschine und integrierte Cup-Holders sowie eine Cooling-Box mit gegebenenfalls einem Kühlschrank von dem Fahrer individuell neu in der Fahrerkabine eines LKWs eingerichtet werden. Zudem sind persönliche Ausrüstungen, wie Waschutensilien und Kleider, in der Kabine zu stationieren. Da mittlerweile die Anzahl der anzuordnenden und in die LKW-Kabine zu stationierenden individuellen Gegenstände des Fahrers sehr groß ist, besteht die Notwendigkeit, dies auf einfache und schnelle Weise stattfinden zu lassen. Ansonsten müsste der Fahrer mehrmals zwischen dem stationären Ort, an dem diese Gegenstände aufbewahrt sind und der LKW-Kabine hin und her laufen. Zudem besteht Bedarf, diese Gegenstände aufgrund der baulich bedingten Höhe der LKW-Kabine auf einfache Weise in das Innere der Kabine trotz ihres Gewichtes bringen zu können.
Außerdem ist die Anordnung dieser Gegenstände in ordentlicher und aufgeräumter Form innerhalb der Kabine gewünscht. Dies ist häufig dadurch nicht realisierbar, dass aufgrund der Anordnung des Fahrersitzes und des Beifahrersitzes wenig Restplatz innerhalb der Kabine vorhanden ist, insbesondere wenn im hinteren Bereich der Kabine noch ein Schlafplatz vorhanden sein soll. Als nächstliegender Stand der Technik wird US 2005/264020 A1 angesehen und offenbart eine Fahrerkabine eines Nutzfahrzeugs, umfassend einen Sitz, welcher dazu eingerichtet ist, außerhalb der Fahrerkabine und innerhalb eines Innenraums der Fahrerkabine mobil positioniert und von außerhalb der Fahrerkabine in den Innenraum der Fahrerkabine mittels eines Liftsystems automatisch transportiert zu werden, wobei der Sitz mit einer unmittelbar mit einer Bodenfläche der Fahrerkabine befestigbaren und um eine Vertikalachse schwenkbaren ersten Drehachse zur Durchführung einer Schwenkbewegung mechanisch fest verbindbar ist, wobei die erste Drehachse mit einer dritten Drehachse verbindbar ist, wobei der Sitz mit einer um die dritte Drehachse schwenkbar angeordneten zweiten Drehachse verbindbar ist, wobei die erste, die zweite und die dritte Drehachse jeweils senkrecht zur Bodenfläche angeordnet sind. Das Dokument DE 10 2004 025248 A1 offenbart eine Fahrerkabine eines mit einem Aufbewahrungsbehälter. Demzufolge ist es Aufgabe der Erfindung, ein Gesamtsystem und insbesondere einen Aufbewahrungsbehälter für oben genannte Gegenstände zu schaffen, welche zusammen innerhalb der Fahrerkabine eine geordnete und aufgeräumte Anordnung der verschiedenen Gegenstände des Fahrers und gegebenenfalls des Beifahrers auf einfache Weise während der Zuladung und während des Betriebs ermöglicht.

Dies wird erfindungsgemäß durch die Merkmale des Patentanspruchs 1 gelöst, und zwar unter anderem dadurch, dass bei der Fahrerkabine eines Nutzfahrzeugs ein außerhalb der Fahrerkabine und innerhalb eines Innenraums der Fahrerkabine mobil positionierbarer Aufbewahrungsbehälter vorgesehen ist. Dieser ist von außerhalb der Fahrerkabine in den Innenraum der Fahrerkabine automatisch transportierbar, wobei der Aufbewahrungsbehälter mit mindestens einer an einer Bodenfläche der Fahrerkabine befestigbaren und um eine Vertikalachse schwenkbaren Drehachse zur Durchführung einer Schwenkbewegung mechanisch fest verbindbar ist.

Der automatische Transport in die Fahrerkabine kann beispielsweise mittels eines Liftsystems erfolgen, welches später noch genauer beschrieben wird. So muss der Fahrer den mitunter recht großen und schweren Aufbewahrungsbehälter nicht mit bloßer Muskelkraft in die Kabine hieven. Um Zeit zu sparen, kann der Aufbewahrungsbehälter außerhalb der Kabine bereits mit persönlichen Gegenständen oder auch Fahrtunterlagen bestückt werden. Wenn der LKW bereitsteht, kann der Fahrer in einem Arbeitsschritt alle erforderlichen Sachen in einem Aufbewahrungsbehälter an Bord bringen.

Durch die Verbindung der mit der Fahrerkabine verbundenen Drehachse mit dem Aufbewahrungsbehälter (auch Container oder Box genannt) kann letzterer zusätzlich innerhalb der Fahrerkabine auf geführte Weise um die Drehachse verschwenkt bzw. verdreht werden und so definierte und sichere Positionen einnehmen. Dies ist vor allem während der Fahrt wichtig, bei der der Fahrer nicht durch lose bzw. ungesichert angeordnete Container gefährdet werden darf.

Dabei ist die Drehachse beispielsweise eine Welle und kann insbesondere auch als Drehzapfen oder Drehzapfenelement bezeichnet werden. Beispielsweise kann die Welle gegenüber der Bodenfläche mit mindestens zwei oberhalb und/ oder unterhalb der Bodenfläche in mindestens einem Tragelement angeordneten Wälzlagern drehbar gelagert sein, wobei das Tragelement mechanisch starr mit der Bodenfläche verbunden ist. Bevorzugt ist die Dreh-Bevorzugt ist die Drehachse hinsichtlich ihrer Winkelposition gegenüber der Bodenfläche arretierbar. Beispielsweise ist die Drehachse hierzu mit außenumfänglich gleichmäßig angeordneten Aussparungen versehen, welche beispielsweise im Abstand von 10° angeordnet sind. In diese kann ein komplementär dazu ausgebildeter Zapfen eingreifen, welcher fest an der Bodenfläche, aber verschwenkbar in Radialrichtung der Drehachse angeordnet ist. Durch ein Verschwenken des Zapfens in radialer Richtung der Drehachse und Eingreifen des Zapfens in jeweils eine Aussparung kann die Drehachse arretiert bzw. wieder freigegeben werden. Alternativ kann eine Anordnung aus Magneten, welche umfänglich in regelmäßigen Abständen an der Drehachse angeordnet sind, und Gegenmagneten, welche an der Bodenfläche umfänglich um die Drehachse angeordnet sind, verschiedene Rastpositionen definieren.

Die Ausrichtung der Bodenfläche ist dabei bevorzugt horizontal, wenn das Nutzfahrzeug auf ebenem Untergrund steht.

Ferner ist es denkbar, dass der Aufbewahrungsbehälter an einer unmittelbar mit der Bodenfläche verbundenen ersten Drehachse befestigt ist oder mit einer zweiten Drehachse verbunden ist und zwischen der ersten Drehachse und der zweiten Drehachse ein parallel zur Bodenfläche angeordneter Schwenkarm angeordnet ist.

Die erste Anordnung ermöglicht eine kompakte Drehung des Aufbewahrungsbehälters. Die Ausgestaltung der Drehachse entspricht dem oben beschriebenen Beispiel. Dafür kann der Aufbewahrungsbehälter beispielsweise eine Aussparung an seiner Bodenfläche aufweisen, die zur Form der Drehachse komplementär ausgebildet ist, beispielsweise zu einer kreisförmigen Drehachse eine zylindrische Aussparung. Vorteilhaft kann der ansonsten kreisförmige Querschnitt der Drehachse zusätzlich an zumindest einer Stelle mit einer Abflachung versehen sein. So kann beispielsweise eine Positionssicherung des Aufbewahrungsbehälters gegenüber der Drehachse in umfänglicher Richtung der Drehachse erzielt werden, wenn die Aussparung des Aufbewahrungsbehälters ebenfalls mit einer komplementär gestalteten Abflachung ausgebildet ist.

Die zweite Anordnung mit Schwenkarm erlaubt hingegen einen größeren Bewegungsradius des Aufbewahrungsbehälters innerhalb der Fahrerkabine. Dafür ist an der ersten Drehachse ein Schwenkarm mit einem ersten Ende angeordnet. Mit einem zweiten Ende ist der Schwenkarm entweder unmittelbar mit einer zweiten Drehachse verbunden, die jedoch nicht direkt mit der Bodenfläche verbunden ist, sondern eine indirekte Verbindung mit dieser über Schwenkarm und Drehachse aufweist. Die zweite Drehachse und der Schwenkarm drehen sich also um die erste unmittelbar mit der Bodenfläche verbundene Drehachse. Alternativ kann zwischen zweitem Ende des Schwenkarms und zweiter Drehachse eine dritte Drehachse mit einem Verbindungsstück angeordnet sein, was anhand der Figuren noch näher erläutert wird.

Vorteilhaft ist der Aufbewahrungsbehälter zwischen der unmittelbaren Anordnung an der ersten Drehachse und der unmittelbaren Anordnung an der zweiten Drehachse umsteckbar, so dass er in beiden Positionen genutzt werden kann.

Dabei kann die erste Verbindung zwischen erstem Ende des Schwenkarms und erster Drehachse starr sein, also beispielsweise als Schweißverbindung ausgestaltet sein. Ebenfalls kann mittels eines Wälzlagers zwischen Schwenkarm und erster Drehachse eine bewegliche Verbindung ausgebildet sein. Denkbar ist ferner eine Gelenkverbindung, insbesondere eine Kugelgelenkverbindung.

Die zweite Verbindung zwischen zweitem Ende des Schwenkarms und zweiter bzw. dritter Drehachse kann genauso wie die erste Verbindung oder unterschiedlich zu dieser ausgestaltet sein.

Dabei ist es möglich, dass der Schwenkarm maschinell oder manuell verschwenkbar ist. Denkbar ist beispielsweise eine Unterstützung der Verschwenkbewegung mittels eines hydraulischen, elektrischen oder pneumatischen Antriebs, welcher von den Insassen des Nutzfahrzeugs bedient werden kann. Weiterhin ist denkbar, dass der Schwenkarm gegenüber der Bodenfläche beabstandet oder kontaktierend ausgebildet ist. Im letzteren Fall ist es vorteilhaft, wenn der Schwenkarm zur Bodenfläche kugel- oder rollengelagert ist. Denkbar ist auch, dass zumindest an der unteren Fläche des Schwenkarms eine Gleitschicht angeordnet ist, welche beispielsweise aus Polyoxymethylen (POM) oder Polytetrafluorethylen (Teflon) besteht.

Beispielsweise kann der Schwenkarm mittels eines länglichen Hebels ausgebildet sein. Weiterhin kann er aus Kunststoff, einem faserverstärktem Kunststoff oder einem Metall wie zum Beispiel Aluminium oder Stahl oder einer Metalllegierung bestehen.

Im kastenförmigen Aufbewahrungsbehälter können wie erwähnt beispielsweise Fahrtunterlagen oder auch persönliche Sachen des Fahrers aufbewahrt werden. Ist der Aufbewahrungsbehälter um 360° um die Drehachse drehbar, können Fahrer bzw. Beifahrer von jedem Ort der Fahrerkabine optimalen Zugriff auf ihn haben.

Gemäß einem bevorzugten Ausführungsbeispiel ist es dabei vorteilhaft, wenn der Schwenkarm parallel zur Bodenfläche der Fahrerkabine verlaufend angeordnet ist. So dreht er sich in einer Ebene parallel zur Bodenfläche um die Drehachse.

Dabei kann der Schwenkarm beispielsweise nicht nur parallel, sondern zusätzlich direkt kontaktierend zur Bodenfläche ausgebildet sein. Beispielsweise kann eine untere Fläche des Schwenkarms gegenüber der Bodenfläche kugel- oder gleitgelagert sein. Ebenfalls kann hierbei der erste Endabschnitt des Schwenkarms mittels einer mechanisch starren Verbindung an der Drehachse befestigt sein. Ist eine unabhängige Bewegung zwischen Schwenkarm und Drehachse gewünscht, kann statt einer starren Verbindung beispielsweise ein Gleitlager, zum Beispiel ein Rundtischgleitlager, angeordnet sein.

Allgemein ist es vorteilhaft, wenn die Verbindung zwischen Aufbewahrungsbehälter und Drehachsen bzw. Schwenkarm lösbar und/ oder arretierbar ist.

Bevorzugt sind dabei der erste und der zweite Endabschnitt des Schwenkarms in Längserstreckungsrichtung gesehen an sich gegenüberliegenden Enden des Schwenkarms angeordnet.

Weiterhin ist es vorteilhaft, wenn der Aufbewahrungsbehälter gegenüber der Bodenfläche in mindestens zwei Rastpositionen verdrehsicher fixierbar ist. So kann zum Beispiel die erste Rastposition die Position darstellen, in der der Aufbewahrungsbehälter während der Fahrt für den Fahrer erreichbar und somit in der Nähe des Fahrersitzes angeordnet ist. Die zweite Rastposition kann beispielsweise eine aufgeräumte Position unterhalb einer Liege für den Fahrer darstellen, in der der Aufbewahrungsbehälter während der Ruhezeiten des Fahrers abgestellt wird und/oder gut für den Fahrer nach dem Aufstehen erreichbar ist.

Gemäß einem weiteren bevorzugten Ausführungsbeispiel ist es dabei vorteilhaft, wenn der Aufbewahrungsbehälter mittels einer Befestigungseinrichtung mittels Kraftschluss und/ oder Formschluss mit der mindestens einen Drehachse verbindbar ist. Die Befestigungseinrichtung kann auch als Eingreifeinrichtung ausgebildet sein. So kann die oben erwähnte Verbindung aus Drehachse und komplementär ausgebildeter Aussparung mit Abflachung zusätzlich noch durch einen die Wandung der Aussparung und die Drehachse durchdringenden Sicherungsstift oder -splint ergänzt werden. Denkbar ist auch, dass am Aufbewahrungsbehälter an einer Ecke eine Hülse angeordnet ist, welche auf die Drehachse aufgesteckt und von oben mit einer Mutter gekontert wird. Denkbar ist eine Verbindung aus einer an der Drehachse angeordneten Führungsschiene und einer am Aufbewahrungsbehälter angeordneten Gleitschiene, wobei die Führungsschiene beispielsweise einen rechteckigen Querschnitt und die Gleitschiene einen C-förmigen Querschnitt aufweist, mittels welchem der rechteckige Querschnitt umgreifbar ist.

Um ein möglichst einfaches Beladen der Fahrerkabine mit dem Aufbewahrungsbehälter zu ermöglichen, ist es insbesondere vorteilhaft, wenn die zweite Drehachse mittels eines Teleskoparms ausgebildet ist, welcher von einem nicht-ausgefahrenen Grundzustand bis zu einem maximal ausgefahrenen Zustand mittels einer Ausfahrbewegung teleskopartig ausfahrbar ist. Dabei ist - wie später anhand der Figuren noch näher erläutert wird - die Drehachse bevorzugt nach unten ausfahrbar, um mit dem Aufbewahrungsbehälter verbunden zu werden. Anschließend fährt die Drehachse wieder nach oben ein und hievt den Aufbewahrungsbehälter nach oben.

Um dieses Ausfahren nach unten zu ermöglichen, ist es insbesondere vorteilhaft, wenn der Schwenkarm, an dem die zweite Drehachse befestigt ist, entlang seiner Längserstreckungsrichtung von einem Grundzustand bis zu einem vollständig ausgezogenen Zustand teleskopartig ausfahrbar ist. So kann der Schwenkarm erst in Richtung der Beifahrertür verschwenkt und dann ausgefahren werden, bis der zweite Endabschnitt des Schwenkarms mit daran befestigter zweiter Drehachse entweder durch die geöffnete Beifahrertür hinaus über die Bodenfläche der Fahrerkabine hinausragt oder zumindest die über die dritte Drehachse verbundene zweite Drehachse außerhalb der Bodenfläche der Fahrerkabine angeordnet ist. Im ersten Fall kann die zweite Drehachse zum Beispiel nach unten durch eine Aussparung im Schwenkarm ausfahren. Im zweiten Fall kann die zweite Drehachse um die dritte Drehachse herumschwenken und fährt anschließend ohnehin ohne Kollision mit dem Schwenkarm nach unten aus.

Die zweite und auch die dritte Drehachse können insbesondere jeweils als stangenartiges Element ausgebildet sein. Sind beide Drehachsen vorhanden, können diese zueinander parallel und senkrecht zum ersten Schwenkarm angeordnet sein. Ferner kann bevorzugt die dritte Drehachse zum Schwenkarm mechanisch starr angeordnet sein, so dass die zweite Drehachse um die dritte Drehachse drehbar angeordnet ist. Denkbar ist aber auch, dass die zweite und die dritte Drehachse zueinander starr und gegenüber dem Schwenkarm miteinander verschwenkbar angeordnet sind. Die zweite Drehachse kann dabei gleich oder unterschiedlich zur ersten Drehachse ausgebildet sein.

Eine einfache Verbindung zwischen zweiter und dritter Drehachse ist beispielsweise dadurch gewährleistet, wenn die beiden Drehachsen beabstandet zueinander angeordnet sind und miteinander mittels eines Verbindungselements verbindbar sind. Das Verbindungselement ist hierfür vorteilhaft jeweils an einem ersten oberen Endabschnitt der beiden Drehachsen anordenbar. Beispielsweise kann das Verbindungselement plattenähnlich ausgestaltet sein. Weiterhin kann das Verbindungselement entweder wie oben beschrieben starr mit beiden Drehachsen oder nur mit einer starr und mit der anderen schwenkbar verbunden sein. Es ist dabei vorteilhaft, wenn die oberen Endabschnitte der beiden Drehachsen innerhalb der Fahrerkabine auf gleicher Höhe angeordnet sind.

Um eine möglichst vorteilhafte Aufteilung des Aufbewahrungsbehälters zu erreichen, hat es sich bewährt, wenn der Aufbewahrungsbehälter aus mindestens drei in Höhenrichtung des Aufbewahrungsbehälters aufeinanderfolgend angeordneten Abschnitten aufgebaut ist. Diese können insbesondere als Stauraum für verschiedene Gegenstände bzw. Apparate dienen, wie nachfolgend noch näher erläutert.

Dabei sind die Abschnitte vorteilhaft schwenkbar um die erste oder zweite Drehachse angeordnet. Insbesondere ist es vorteilhaft, wenn die Abschnitte um die mindestens eine Drehachse gegeneinander jeweils um 360° von einem gesch lossenen Grundzustand zu einem aufgefächerten Zustand des Aufbewahrungsbehälters horizontal verschwenkbar und/oder wendeltreppenartig anordenbar sind. Die Abschnitte sind also unabhängig voneinander gegeneinander bzw. gegen die Drehachse verschwenkbar. Der Fahrer kann also beispielsweise einen einzelnen Abschnitt verschwenken, um Zugriff auf in diesem Abschnitt deponierte Dokumente zu erhalten.

Im Sinne der Erfindung entspricht der geschlossene Grundzustand des Aufbewahrungsbehälters dem Zustand, in dem alle Abschnitte sich hinsichtlich ihrer Grundfläche weitestgehend überlappen. Bei quaderförmigen Abschnitten, welche die gleiche Form und Größe der Grundfläche, nämlich ein Rechteck mit gleich langen Seiten, aufweisen, wäre der geschlossene Grundzustand des Aufbewahrungsbehälters also die, bei der gleich ausgestaltete Seitenflächen der Abschnitte des Aufbewahrungsbehälters jeweils parallel zueinander und in die gleiche Richtung weisend ausgerichtet sind.

Dahingegen ist beim aufgefächerten Zustand zumindest ein Abschnitt gegenüber den restlichen Abschnitten verschwenkt angeordnet. Bevorzugt sind die Abschnitte stufenlos verschwenkbar. Denkbar ist auch, dass mehrere Abschnitte gegenseitig verschwenkt werden, so dass sich ihre Grundflächen zumindest teilweise noch überlappen. Es kann also eine Art Wendeltreppe aus dem Aufbewahrungsbehälter gebildet werden, wobei die Abschnitte die einzelnen Stufen und die Drehachse die Mittelsäule der Wendeltreppe darstellt. Auf dieser Wendeltreppe kann der Fahrer innerhalb oder außerhalb der Fahrerkabine nach oben steigen, um Gegenstände zu erreichen bzw. Funktionen nutzen zu können, die ansonsten oberhalb seines Einflussbereichs lägen.

Vorteilhaft sind die einzelnen Abschnitte beispielsweise im Wesentlichen in Form einer Schachtel/Kiste/Box ausgebildet, welche mit einem Deckel versehen sein kann.

Ebenfalls vorteilhaft ist es, wenn die Abschnitte des Aufbewahrungsbehälters entlang der mindestens einen Drehachse in axialer Richtung zueinander verschiebbar angeordnet sind. Weiterhin vorteilhaft ist es, wenn die Abschnitte zusätzlich hinsichtlich ihrer neuen Position gegenüber der Drehachse fixierbar sind. So kann zum einen ein einzelner Abschnitt hinsichtlich seiner Schwenkposition an seiner ursprünglichen Position, die hinsichtlich der Position seiner Grundfläche beispielsweise deckungsgleich mit den anderen Abschnitten ausgebildet ist, verbleiben und nur nach oben verschoben und dort fixiert werden. Auch so ist ein Zugriff auf den Inhalt des Abschnitts möglich.

Weiterhin ist es möglich, dass die Abschnitte um eine Drehachse verschwenkbar sind, die nicht der vertikalen Drehachse entspricht. Beispielsweise sind die Abschnitte um eine horizontale Achse verschwenkbar.

Zur Realisierung dieser Freiheitsgrade ist es insbesondere vorteilhaft, wenn die Abschnitte jeweils einen ersten mit der mindestens einen Drehachse verbindbaren hülsenförmigen Unterabschnitt umfassen, wobei zwischen dem ersten Unterabschnitt und einem zweiten Unterabschnitt der Abschnitte eine Gelenkverbindung, bevorzugt eine Kugelgelenkverbindung, angeordnet ist.

Die ersten Unterabschnitte stellen also die Verbindung zur Drehachse dar. Vorteilhaft ist zumindest an dem Innendurchmesser der Hülse eine Gleitbeschichtung, beispielsweise aus Polytetrafluorethylen (Teflon) oder auch Polyoxymethlen (POM) angeordnet ist.

Dabei können die zweiten Unterabschnitte beispielsweise in der oben erwähnten rechteckigen Boxform vorliegen und gegenüber den ersten Unterabschnitten verdreht werden. Neben einem Kugelgelenk, welches eine Relativbewegung in drei Richtungen erlaubt, kann insbesondere auch ein Drehmomentscharnier (auch Friktionsscharnier genannt) die Gelenkverbindung zwischen ersten Unterabschnitten und zweiten Unterabschnitten ausbilden. Dieses rein mechanische Bauelement dient dazu, eine beispielsweise manuell voreingestellte Winkelposition selbsttätig zu halten und erlaubt somit beispielsweise eine Relativbewegung in zwei Richtungen.

Zur Sicherung der Position der ersten Unterabschnitte gegenüber der Drehachse hat es sich in der Praxis bewährt, wenn die ersten Unterabschnitte jeweils mindestens eine zur mindestens einen Drehachse senkrecht angeordnete Bohrung aufweisen, welche mit in der Drehachse angeordneten Aussparungen in Deckung bringbar sind, wobei ein Tragstift durch die Bohrungen und die Aussparungen hindurchgehend anordenbar ist. Damit lassen sich also eine axiale und eine radiale Sicherung durch Formschluss erzielen. Denkbar ist, dass an der Drehachse in verschiedenen radialen und/oder axialen Abständen jeweils passende Bohrungen angeordnet sind, wodurch verschiedene fixierbare Positionen der Abschnitte realisiert werden. Alternativ oder zusätzlich kann die Drehachse umlaufende ringförmige Absätze aufweisen, mittels denen die Abschnitte in axialer Richtung gesichert werden können.

Als weitere Alternative kann auf die Teflonbeschichtung bzw. die Anordnung von Tragstiften verzichtet werden und die ersten Unterabschnitte gegenüber der Drehachse mittels Reibschluss, beispielsweise durch Anbringung eines Reiblagers zwischen ersten Unterabschnitten und Drehachse, gesichert werden. Dies ist vor allem dann sinnvoll, wenn der dazugehörige Abschnitt des Aufbewahrungsbehälters nicht zu schwer ist, da dann noch eine zuverlässige axiale Sicherung des ersten Unterabschnitts gegenüber der Drehachse gegeben ist.

Weiterhin ist es vorteilhaft, wenn von den in Höhenrichtung des Aufbewahrungsbehälters aufeinanderfolgend angeordneten Abschnitten ein erster, oberer Abschnitt als Arbeitsfläche, insbesondere als Ess- und/oder Arbeitsfläche, für einen Fahrer und/oder Beifahrer der Fahrerkabine ausgebildet ist und/oder ein Tablet an dem ersten Abschnitt angeordnet ist. Durch die oben beschriebene Gelenkanordnung zwischen Drehachse und ersten Unterabschnitten kann das Tablet senkrecht, auf alle Fälle aber geneigt zum Fahrer hingewandt angeordnet werden, so dass eine optimale Sicht auf den Bildschirm des Tablets gewährleistet ist. Eine horizontale Ausrichtung der Grundfläche des ersten Abschnitts kann vorteilhaft sein, wenn der Fahrer Essen und Getränke auf dem ersten Abschnitt deponieren will.

Weiterhin ist es vorteilhaft, wenn von den in Höhenrichtung des Aufbewahrungsbehälters aufeinanderfolgend angeordneten Abschnitten ein zweiter, mittlerer Abschnitt als Aufbewahrungsabschnitt, insbesondere für aufzubewahrende Dokumente wie Frachtpapiere, ausgebildet ist.

Und schließlich ist es vorteilhaft, wenn von den in Höhenrichtung des Aufbewahrungsbehälters aufeinanderfolgend angeordneten Abschnitten ein dritter, unterer Abschnitt als Aufbewahrungsabschnitt, insbesondere für eine Kaffeemaschine, für einen Cup-Holder mit einer Kaffeekanne und/oder für eine aktive Kühlbox für Kaltgetränke, ausgebildet ist.

Dabei ist es denkbar, dass zur Stromversorgung der Komponenten Stromleitungen von den einzelnen Abschnitten des Aufbewahrungsbehälters aus über die Drehsäule bzw. durch die Drehsäule hindurch zum Bereich unter der Bodenfläche der Fahrerkabine verlaufend bereitgestellt werden. In einem bevorzugten Ausführungsbeispiel sind Schleifkontakte so angeordnet, dass bei einem Verschwenken eines Abschnitts des Aufbewahrungsbehälters in eine bestimmte Position zur Drehachse die Stromverbindung automatisch hergestellt wird. Weiterhin bevorzugt ist es, wenn an den einzelnen Abschnitten Schalter zum Ein- oder Ausschalten der in den Abschnitten vorhandenen elektrischen Geräte angeordnet sind.

Um die verschiedenen Funktionen des Aufbewahrungsbehälters möglichst effizient nutzen zu können, hat es sich bewährt, dass der Aufbewahrungsbehälter zwischen einem Fahrersitz und einem Beifahrersitz der Fahrerkabine und/oder in einem hinteren Bereich der Fahrerkabine anordenbar ist. Diese Anordnung hat den Vorteil, dass sowohl Fahrer als auch Beifahrer von ihrem Sitz aus und gegebenenfalls von ihrer Ruhefläche aus auf den Aufbewahrungsbehälter zugreifen können.

Vor Beladen der Fahrerkabine mit dem Aufbewahrungsbehälter muss der Fahrer diesen beispielsweise aus einem Speditionsgebäude holen. Für einen möglichst einfachen Transport des Aufbewahrungsbehälters zwischen Speditionsgebäude und Nutzfahrzeug hat es sich weiterhin bewährt, wenn der Aufbewahrurigsbehälter an einem trolleyartigen nicht erfindungsgemäßen Gepäcktransportwagen befestigbar und mittels diesem transportierbar ist.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: einen Fahrer beim Beladen des Nutzfahrzeugs;
- Fig. 2: einen beim Beladen nutzbaren Gepäcktransportwagen;
- Fig. 3: die Bestückung des Gepäcktransportwagens mit zwei Aufbewahrungsbehältern;
- Fig. 4: die Verbindung des Gepäcktransportwagens mit den Aufbewahrungsbehältern;
- Fig. 5: eine Darstellung des Gepäcktranspörtwagens mit den verbundenen Aufbewahrungsbehältern in vertikal aufgestelltem Zustand;
- Fig. 6: den Gepäcktransportwagen gemäß Fig. 5 mit einem weiteren Aufbewahrungsbehälter;
- Fig. 7: die Verbindung des Gepäcktransportwagens mit den verbundenen Aufbewahrungsbehältern mit dem weiteren Aufbewahrungsbehälter;
- Fig. 8: eine Darstellung des Gepäcktransportwagens mit den drei verbundenen Aufbewahrungsbehältern-,
- Fig. 9: den Transport des Gepäcktransportwagens mit den drei verbundenen Aufbewahrungsbehältern durch den Fahrer;
- Fig. 10: das Innere einer Fahrerkabine;
- Fig. 11: den ersten Schwenkarm mit stangenartigen Elementen im verschwenkten Zustand;
- Fig. 12: die Verschwenkung des zweiten stangenartigen Elements zum Schwenkarm und die Anordnung außerhalb der Fahrerkabine;
- Fig. 13: das Ausfahren des zweiten stangenartigen Elements und das Befestigen des weiteren Aufbewahrungsbehälters am zweiten stangenartigen Element;
- Fig. 14: das Anheben des weiteren Aufbewahrungsbehälters mittels einer Einfahrbewegung des zweiten stangenartigen Elements;
- Fig. 15: das zweite stangenartige Element im maximal eingefahrenen Zustand;
- Fig. 16: den ersten Schwenkarm und den am zweiten stangenartigen Element befestigten Aufbewahrungsbehälter in einem verschwenkten Zustand;
- Fig. 17-19: verschiedene Schritte der Beladung der Fahrerkabine mit den ersten beiden Aufbewahrungsbehältern;
- Fig. 20: die beladene Fahrerkabine mit geschlossener Beifahrertür;
- Fig. 21: das Innere der Fahrerkabine aus der Vogelperspektive;
- Fig. 22-25: verschiedene Positionen des Aufbewahrungsbehälters innerhalb der Fahrerkabine;
- Fig. 26-29: verschiedene Schritte der Anpassung des Kabineninneren bei einer Pause des Fahrers;
- Fig. 30, 31: Belegung der Kabine mit Fahrer und Beifahrer;
- Fig. 32-35: verschiedene Schritte der Anpassung des Kabineninneren durch den Beifahrer;
- Fig. 36-39: verschiedene Schritte der Anpassung des Beifahrersitzes;
- Fig. 40-42: verschiedene Schritte der Anpassung des Kabineninneren vor Weiterfahrt;
- Fig. 43a, 43b: Komponenten der Fahrerkabine in der Übersicht;
- Fig. 44: eine bevorzugte Ausführungsform des Aufbewahrungsbehälters.

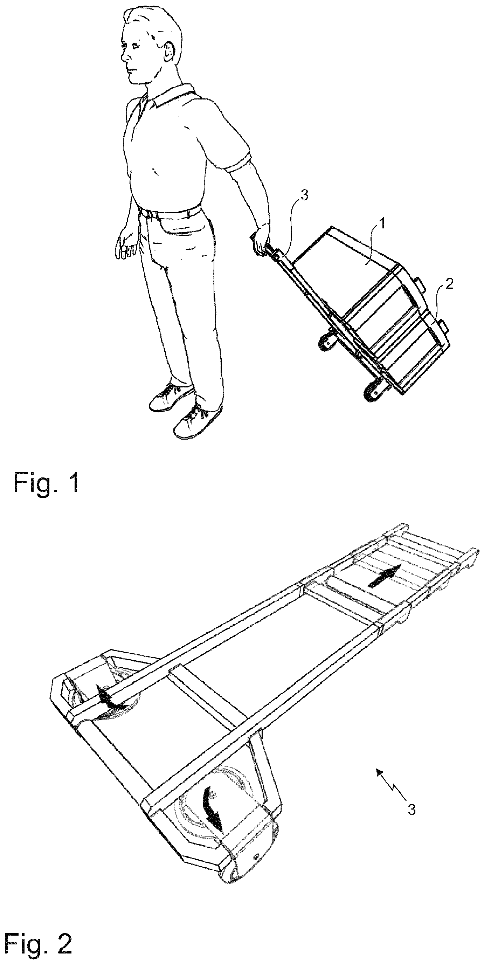

Gemäß Fig. 1 ist vorgesehen, dass der Fahrer eine erste Boxeinheit 1 mit Arbeits- und Nahrungsmitteln und eine zweite Boxeinheit 2 mit persönlichen Utensilien, wie Kleider und Waschutensilien, auf einen gemeinsamen nicht erfindungsgemäßen Gepäcktransportwagen 3 von beilspielsweise einem Speditionsgebäude zu dem LKW transportiert. Der Gepäcktransportwagen 3 ist rollbar und ähnlich einem Trolley von Hand über eine Parkplatzfläche durch den LKW-Fahrer zu ziehen.

Der nicht erfindungsgemäße Gepäcktransportwagen 3 hat gemäß Fig. 2 einklappbare Räder, um ihn raumsparend in der LKW-Kabine oder außenseitig verstauen zu können. Zudem hat er einen ausziehbaren bzw. längenverstellbaren Griff.

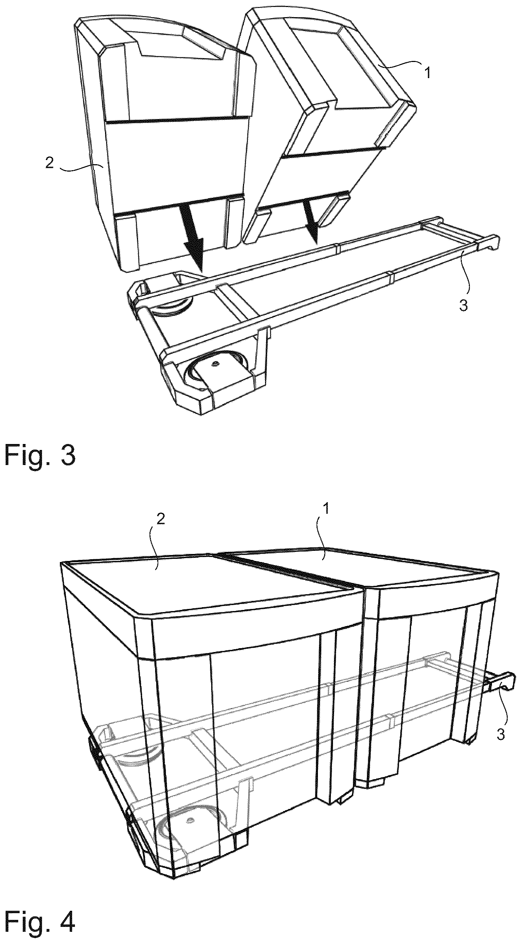

Der Gepäcktransportwagen 3 wird gemäß Fig. 3 mit den beiden Aufbewahrungsbehältern 1 und 2 bestückt und mit diesen mittels üblicher Verbindungen, z. B. mittels Klappverbindungen, verbunden. Eine derartige Verbindung ist in Fig. 4 dargestellt.

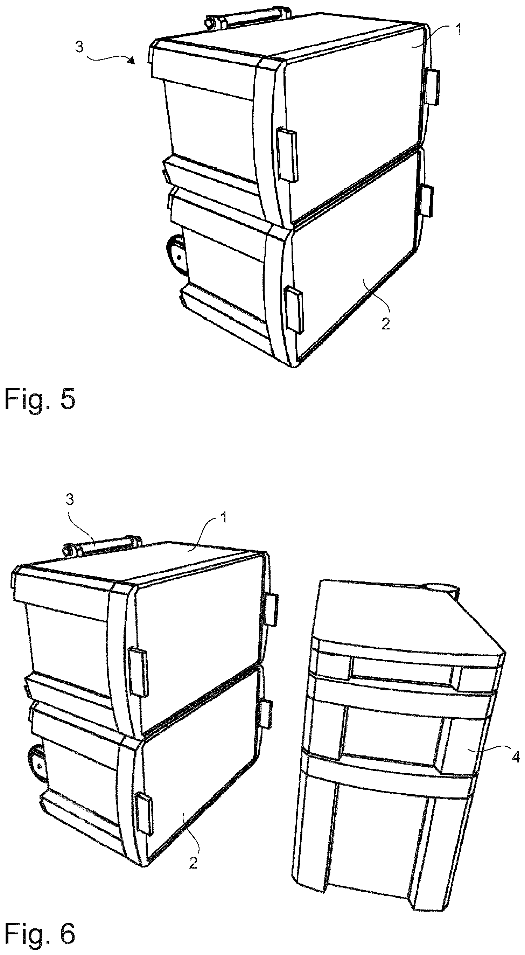

Anschließend wird der Gepäcktransportwagen 3 mit den Aufbewahrungsbehältern 1, 2 gemäß Fig. 5 aufgestellt, also in eine senkrechte Position gebracht.

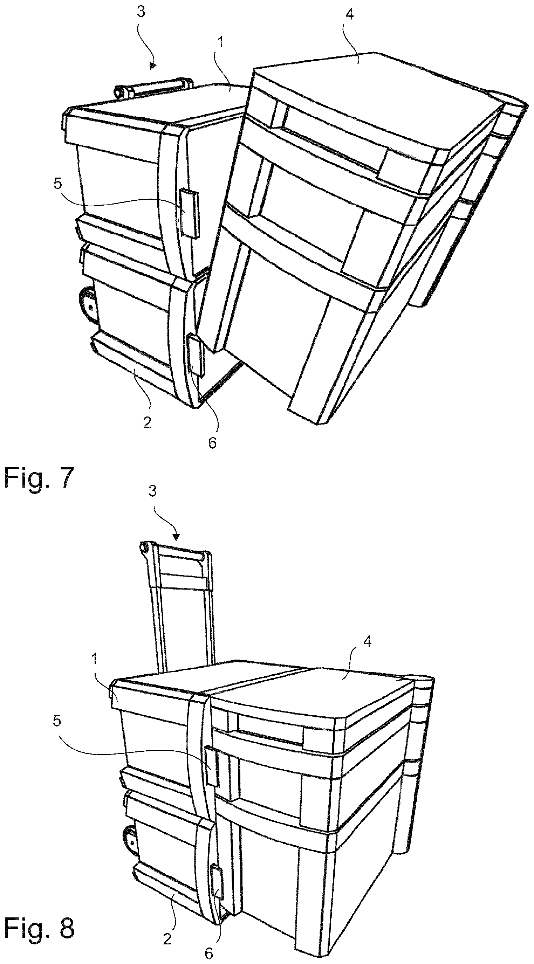

Die Aufbewahrungsbehälter 1, 2 können beispielsweise für persönliches Hab und Gut, wie Utensilien und Kleider verwendet werden. Ein weiterer Aufbewahrungsbehälter 4 gemäß Fig. 6 dient dann dazu, Arbeitsmaterialien wie Dokumente, Tablet-PCs, Kaffeemaschinen und gegebenenfalls weitere Nahrungsmittel mit in die Fahrerkabine 21 einzubringen und dort hin zu transportieren. Dieser weitere Aufbewahrungsbehälter 4 wird gemäß Fig. 7 durch beispielsweise Klappverbindungen 5, 6, die schwenkbar ausgebildet sind und aus Kunststoff bestehen, an den Aufbewahrungsbehältern 1 und 2 befestigt. Somit ist der Aufbewahrungsbehälter 4 an dem trolleyartigen Gepäcktransportwagen 3 befestigbar und mittels diesem transportierbar.

In Fig. 8 ist die feste Verbindung des Gepäcktransportwagens 3 zu den drei Aufbewahrungsbehältern 1, 2 und 4 dargestellt.

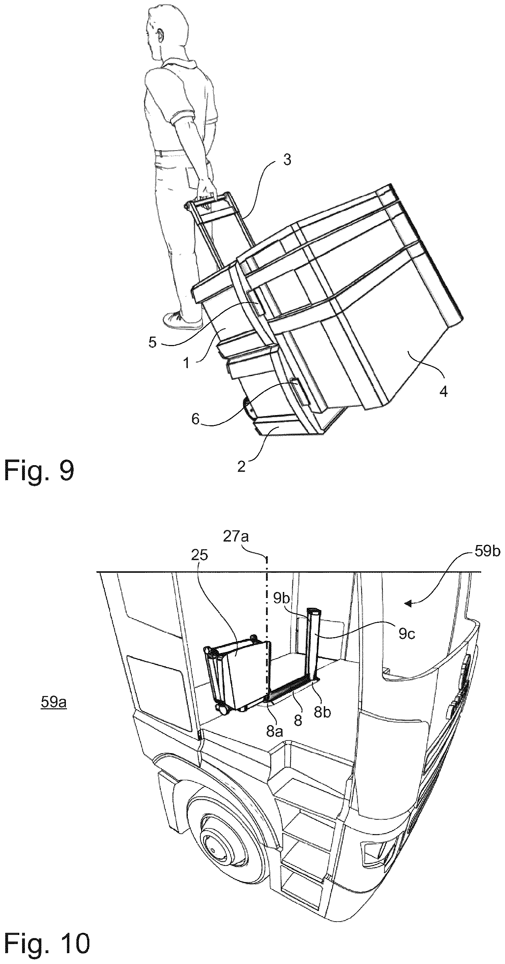

In Fig. 9 ist der Transport dieser drei Behälter 1, 2, 4 mittels des Transportwagens oder Gepäcktransportwagens 3 durch den Fahrer 40 wiedergegeben.

In Fig. 9 wird nun zusammen mit den fortfolgenden Figuren die erfindungsgemäße Beladung der Fahrerkabine 21 mit diesen drei Aufbewahrungsbehältern 1, 2 und 4 wiedergegeben. Zur einfacheren Darstellung ist die LKW-Kabine 21 hier nicht mit der Beifahrertür dargestellt. Es ist davon auszugehen, dass sich die Beifahrertür in einem offenen Zustand befindet.

In Fig. 10 ist deutlich zu entnehmen, dass ein zentraler Schwenkpunkt 7 bzw. eine vertikal angeordnete Drehachse 27a innerhalb der Kabine 21 an einer Bodenfläche 30 der Kabine 21 befestigt ist. An der Drehachse 27a ist vorliegend ein bodenseitig verlaufender Schwenkarm 8 mit seinem ersten Endabschnitt 8a zum Durchführen einer Drehbewegung schwenkbar angeordnet, der wiederum an seinem anderen Endabschnitt 8b im Wesentlichen vertikal verlaufende stangenartige Elemente bzw. Drehachsen 9b, 9c aufweist.

Hierbei ist die Drehachse 27a zwischen einem nicht gezeigten Fahrersitz 24 und einem Beifahrersitz 25 der Fahrerkabine 21 angeordnet.

Weiterhin ist zu sehen, dass an einem zweiten Endabschnitt 8b des ersten Schwenkarms 8 die Drehachsen 9b, 9c zueinander parallel und senkrecht zum ersten Schwenkarm 8 angeordnet sind. Darüber hinaus ist erkennbar, dass die Drehachse 9c beabstandet zur Drehachse 9b angeordnet ist, wobei die oberen Endabschnitte 9b1, 9c1 auf gleicher Höhe miteinander angeordnet sind. Die Drehachse 9c ist mit dieser ersten Drehachse 9b mittels eines Verbindungselements 31 verbunden. Das Verbindungselement 31 ist dabei jeweils an den ersten oberen Endabschnitten 9b1, 9c1 der Drehachsen 9b, 9c angeordnet.

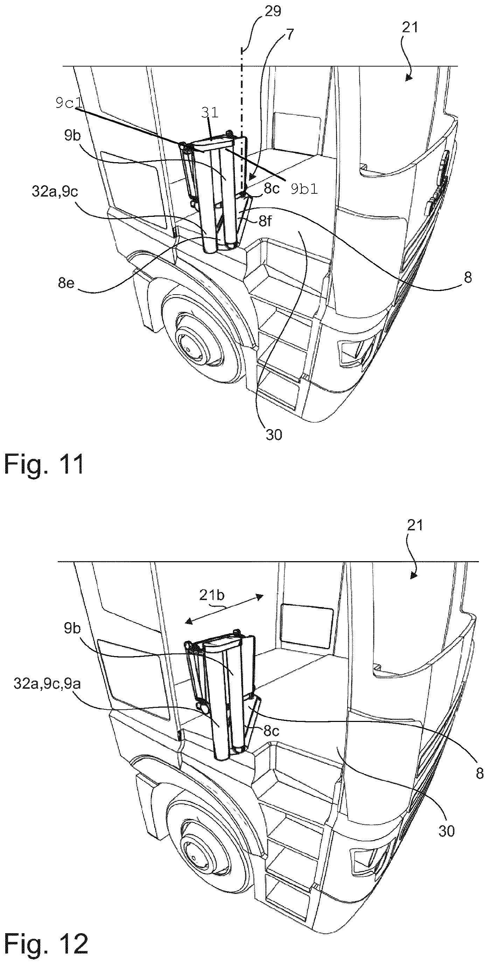

Gemäß Fig. 11 bzw. Fig. 12 kann der erste Schwenkarm 8 um den Schwenkpunkt 7 bzw. um die Drehachse 27a geschwenkt werden, so dass die beiden Drehachsen 9b, 9c über die Fahrerkabine 21 hinaus außenseitig an der Fahrerkabine 21 angeordnet sind. Dabei befindet sich die Drehachse 9c, die als Teleskopelement 9a ausgebildet ist, (noch) in ihrem nicht-ausgefahrenen Grundzustand 32a. Der zweite Endabschnitt 8b des Schwenkarms 8 weist in Richtung zur Beifahrertür.

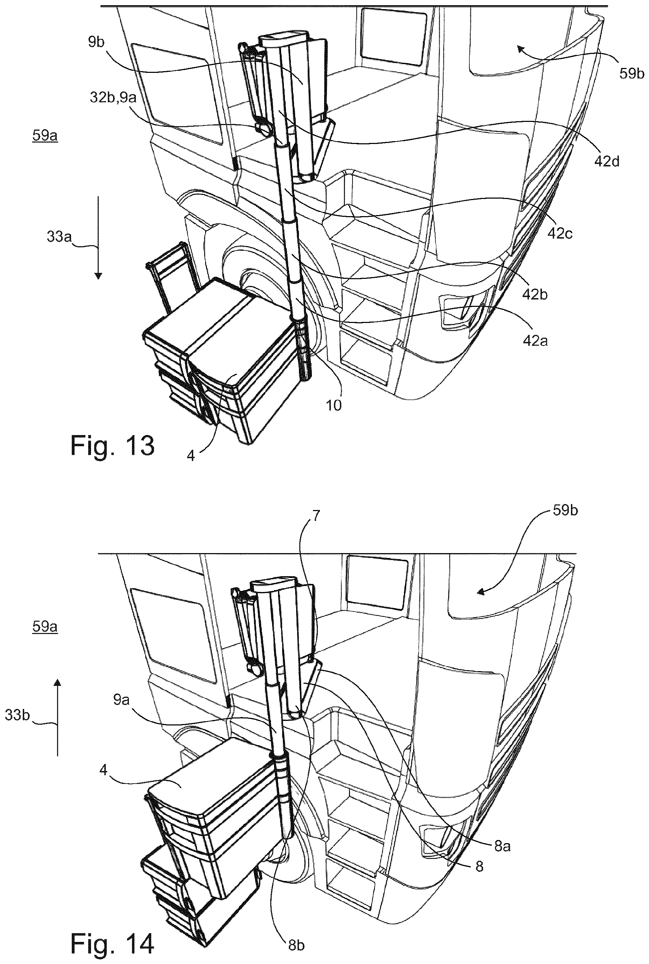

Anschließend findet - wie es in Fig. 12 und Fig. 13 dargestellt ist - ein Ausfahren der Drehachse 9c bzw. 9a statt, indem diese sich nach unten erstreckt bis zu einem hier maximal ausgefahrenen Zustand 32b und in eine dafür komplementär ausgebildete vorgesehene Eingreifeinrichtung 10 des Aufbewahrungsbehälters 4 eingreift. Dies kann beispielsweise mittels eines Klettverschlusses oder Formschlusses oder dergleichen stattfinden, um eine schnellstmögliche Verbindung zwischen dem Aufbewahrungsbehälter 4 und der ausgefahrenen Drehachse 9a herzustellen. Dabei sind bevorzugt die Klappverbindungen 5, 6 gelöst.

Für diese Zwecke ist das zweite stangenartige Element 9c bzw. die zweite Drehachse 9c als Teleskoparm 9a ausgebildet, welcher aus insgesamt vier axial zueinander verschieblich gelagerten hohlzylindrischen Abschnitten 42a, 42b, 42c, 42d mit unterschiedlichen Außendurchmessern und Innendurchmessern besteht und welcher von einem nicht-ausgefahrenen Grundzustand 32a bis zu einem maximal ausgefahrenen Zustand 32b mittels einer Ausfahrbewegung 33a teleskopartig ausfahrbar ist.

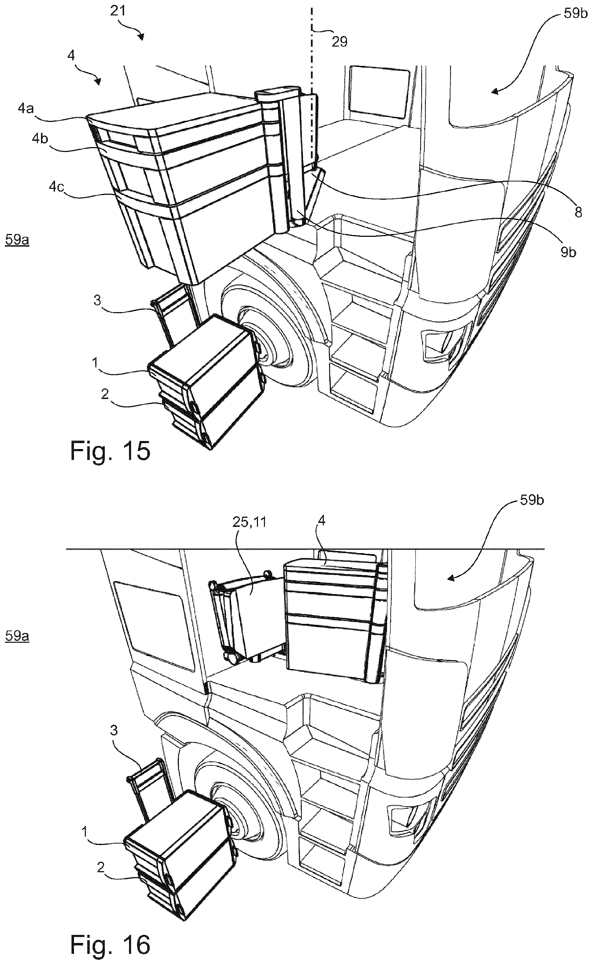

Gemäß Fig. 14, 15 und 16 findet anschließend ein Anheben des Aufbewahrungsbehälters 4 mittels einer Einfahrbewegung 33b des Teleskoparms 9a statt und ein Hineinverschwenken des Aufbewahrungsbehälters 4 um den Schwenkpunkt 7 bzw. die Drehachse 27a in die Fahrerkabine 21, wie es in Fig. 16 dargestellt ist. Anschließend kann der Aufbewahrungsbehälter 4 innerhalb der Fahrerkabine 21 an einem gewünschten Platz, der vorbestimmbar ist, abgestellt werden. Dies setzt voraus, dass der Beifahrersitz 25, wie er gemäß Bezugszeichen 11 im eingeklappten Zustand vorhanden ist, nicht momentan innerhalb des Transportweges für den Aufbewahrungsbehälter 4 angeordnet ist.

Somit findet erfindungsgemäß eine Schwenkung des aufgegriffenen Aufbewahrungsbehälters 4 um den Schwenkpunkt 7 bzw. die Drehachse 27a innerhalb der Fahrzeugkabine 21 statt. Ebenso erfindungsgemäß ist der Beifahrersitz 25 in diesem Zustand eingeklappt und liegt somit als Klappsitz 11 vor. Somit ist der eingeklappte Beifahrersitz 11, der ebenso erfindungsgemäß ausgebildet ist, nicht im Wege stehend bezüglich des Transportweges des Aufbewahrungsbehälters 4.

Damit ist anhand der in den Figuren 13-16 gezeigten Abfolge deutlich erkennbar, dass der außerhalb 59a der Fahrerkabine 21 und innerhalb eines Innenraums 59b der Fahrerkabine 21 mobil positionierbare Aufbewahrungsbehälter 4 von außerhalb 59a der Fahrerkabine 21 in den Innenraum 59b der Fahrerkabine 21 automatisch transportierbar ist.

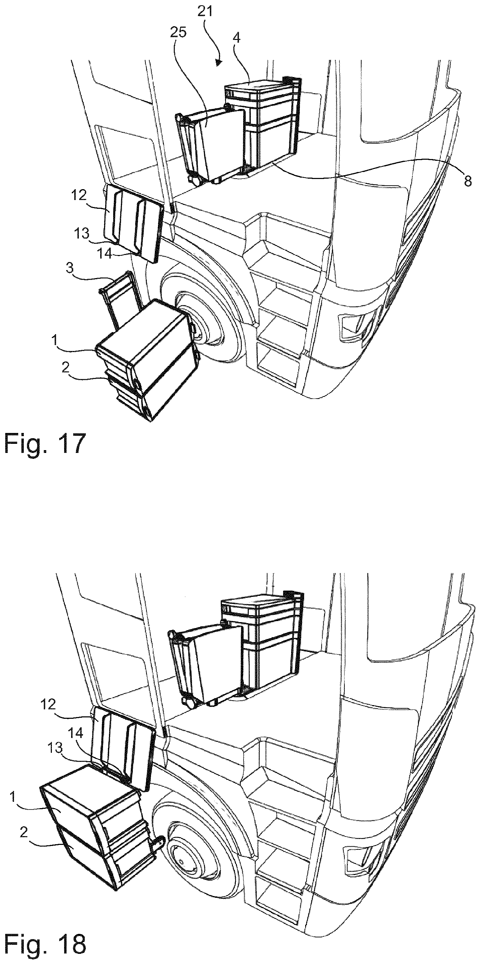

In Fig. 17, 18 und 19 wird der anschließende Transport der Aufbewahrungsbehälter 1 und 2 und somit die Beladung der Fahrerkabine 21 mit den Aufbewahrungsbehältern 1 und 2 dargestellt. Es ist zu sehen, dass diese Aufbewahrungsbehälter 1, 2 über die ohnehin in den bisherigen Fahrerkabinen 21 enthaltene seitliche Ladungsluke 12 mittels Einhängen in dafür vorgesehene Hakenelemente 13 und 14 an der Klappe dieser Öffnung 12 nach oben geschwenkt werden können und in den Fahrerkabinenraum gebracht werden können.

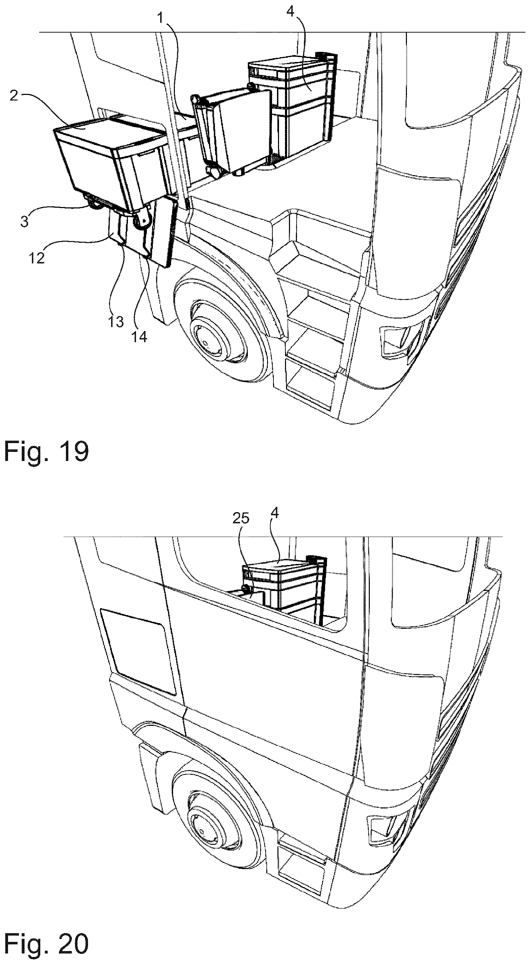

Gemäß Fig. 20 ist die Fahrerkabine mit geschlossener Beifahrertür und den eingebrachten Aufbewahrungsbehältern dargestellt.

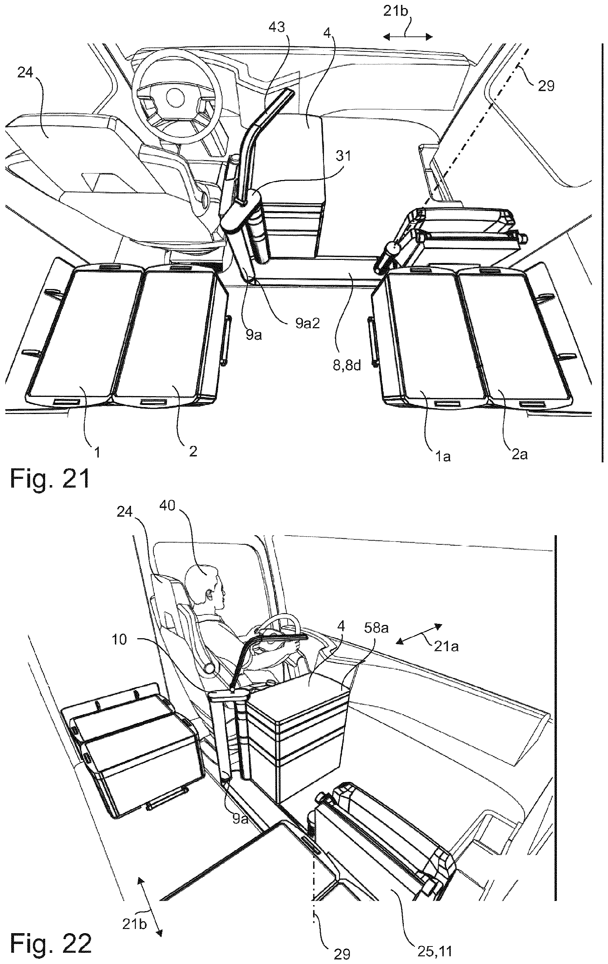

Fig. 21 zeigt nochmals den Fahrerkabineninnenraum nach Beladung mit den Aufbewahrungsbehältern 1, 2, 4. Dieser Darstellung ist deutlich zu entnehmen, dass der weitere Aufbewahrungsbehälter 4 zwischen dem Beifahrersitz 25 und dem Fahrersitz 24 angeordnet ist. Dabei kann ein mit dem oberen Endabschnitt 9a1 temporär verbindbares und manuell bedienbares Schwenkstangenelement 43 für die Erleichterung der Verschwenkung des Aufbewahrungsbehälters 4 sorgen. Die Aufbewahrungsbehälter 1, 2 für persönliches Hab und Gut können ebenso insgesamt vier Aufbewahrungsbehälter 1, 2, 1a und 2a darstellen und innerhalb der Fahrerkabine 21 im rückwärtigen Bereich angeordnet sein. Dies ist in Fig. 21 dargestellt.

Die Figuren 16-22 zeigen zusätzlich, dass der Aufbewahrungsbehälter 4 mit der an einer Bodenfläche 30 der Fahrerkabine 21 befestigbaren und um eine Vertikalachse schwenkbaren Drehachse 9a, 9c zur Durchführung einer Schwenkbewegung mechanisch fest verbindbar ist. Vorliegend ist der Aufbewahrungsbehälter 4 mit der zweiten Drehachse 9a, 9c verbunden, wobei zwischen der direkt an der Bodenfläche 30 angeordneten ersten Drehachse 27a und der zweiten Drehachse 9a, 9c der parallel zur Bodenfläche 30 angeordnete Schwenkarm 8 angeordnet ist.

Ferner ist zu sehen, dass der Aufbewahrungsbehälter 4 nach wie vor an dem Teleskoparm 9a mechanisch fest verbunden angeordnet ist. Denkbar wäre auch, dass im Gegensatz zur gezeigten Anordnung, gemäß der das Verbindungselement 31 nach wie vor zwischen dem Teleskoparm 9a und dem anderen stangenartigen Element 9b angeordnet ist, das andere stangenartige Element 9b und das Verbindungselement 31 nach Beladung der Fahrerkabine 21 entfernt werden sowie der Teleskoparm 9a mit dem zweiten Ende 8b des ersten Schwenkarms 8 verbunden wird.

Denkbar wäre auch, dass der Aufbewahrungsbehälter 4 nun an der Drehachse 9b befestigt wäre, wodurch die Drehachse 9a und das Verbindungselement 31 entfernt werden können. Ebenfalls wäre denkbar, dass der Aufbewahrungsbehälter 4 direkt an der ersten Drehachse 27a befestigt wäre.

In Fig. 22, 23, 24 und 25 ist der Aufbewahrungsbehälter 4 mittig zwischen Fahrersitz 24 und Beifahrersitz 25 angeordnet. Dies entspricht beispielsweise einer ersten Rastposition 58a des Aufbewahrungsbehälters 4, in welcher er gegenüber der Bodenfläche 30 verdrehsicher fixierbar ist. In der gezeigten Position sind zwei Seitenflächen, bevorzugt die zwei längsten Seitenflächen, des Aufbewahrungsbehälters 4 senkrecht zu einer Breitenrichtung 21b der Fahrzeugkabine 21 ausgerichtet. Denkbar ist aber auch, dass in der ersten Rastposition 58a je zwei Seitenflächen unter einem Winkel von 75° bis 105°, bevorzugt von 90° zur Breitenrichtung 21b angeordnet sind.

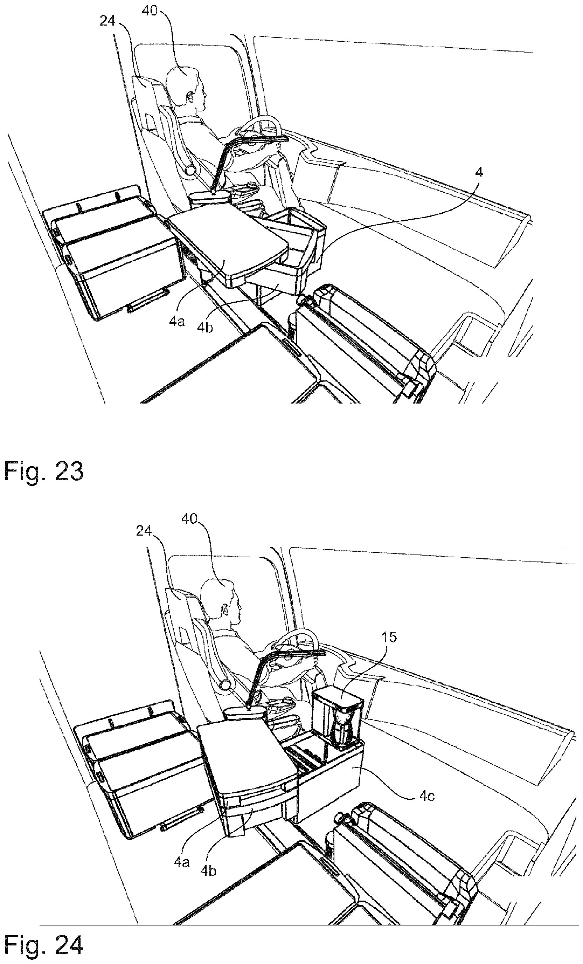

Vorteilhaft weist der Aufbewahrungsbehälter 4 einen derartigen Schwenkmechanismus innerhalb des Behälters 4 auf, dass er - wenn er oberseitig mittels der Befestigung 10 an dem Teleskoparm 9a angeordnet ist - in verschiedenen Niveaus unterschiedlich weit um den Teleskoparm 9a aufgeschwenkt werden kann. Dies ist beispielsweise in Fig. 23, 24 und 25 dargestellt.

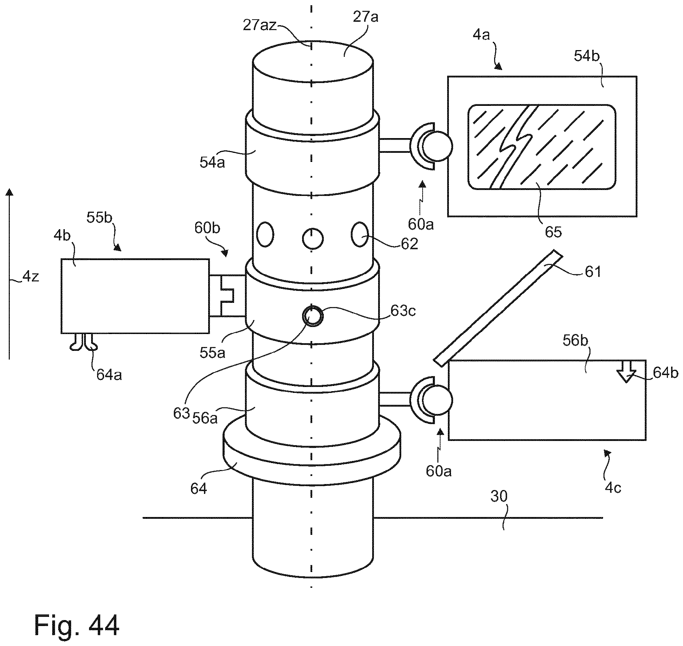

Der obere Abschnitt 4a kann dabei beispielsweise als Arbeitsfläche beispielsweise zum Essen und Arbeiten dienen. Dazu könnte optional der obere Abschnitt 4a beispielsweise mit einem Tablet versehen sein (siehe auch Fig. 44).

Ein darunterliegender, mittlerer Abschnitt 4b ist als Aufbewahrungsabschnitt beispielsweise in Kisten- oder Schachtelform mit oder ohne Deckel oder mit verschiedenen Facheinteilungen versehen und beinhaltet bestimmte aufzubewahrende Dokumente.

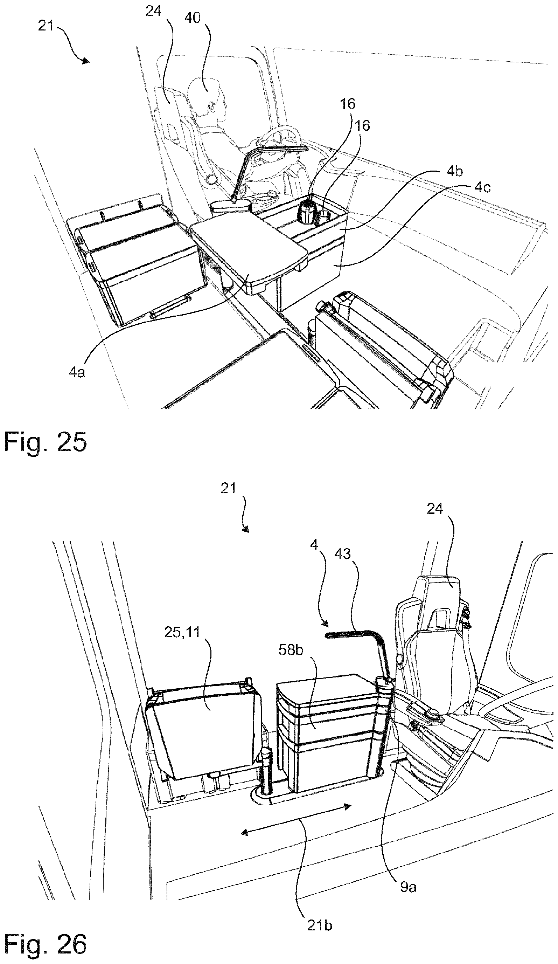

Ein darunterliegender, unterer Abschnitt 4c gemäß Fig. 24 beinhaltet weitere Aufbewahrungsteile, wie beispielsweise eine Kaffeemaschine 15, wie in Fig. 24 gezeigt. Ebenso kann ein Cup-Holder mit einer Kaffeekanne 16 in dem Aufbewahrungsbehälter 4 angeordnet sein. Dies ist in Fig. 25 dargestellt. Der Aufbewahrungsbehälter kann auch optional eine aktive Kühlbox für Kaltgetränke enthalten.

Dabei können die drei Abschnitte 4a, 4b, 4c des Aufbewahrungsbehälters 4 im Wesentlichen mit der gleichen Breite und Länge ausgestaltet sein. Eine weitere bevorzugte Variante sieht vor, dass der obere Abschnitt 4a eine kleinere oder größere Breite und/oder Länge als die anderen Abschnitte 4b, 4c aufweist, wobei an zwei bevorzugt benachbart zur Eingreifeinrichtung 10 angeordneten Seitenflächen des Aufbewahrungsbehälters 4 die Seitenflächen der Abschnitte 4a, 4b, 4c aufeinander ausgerichtet sind.

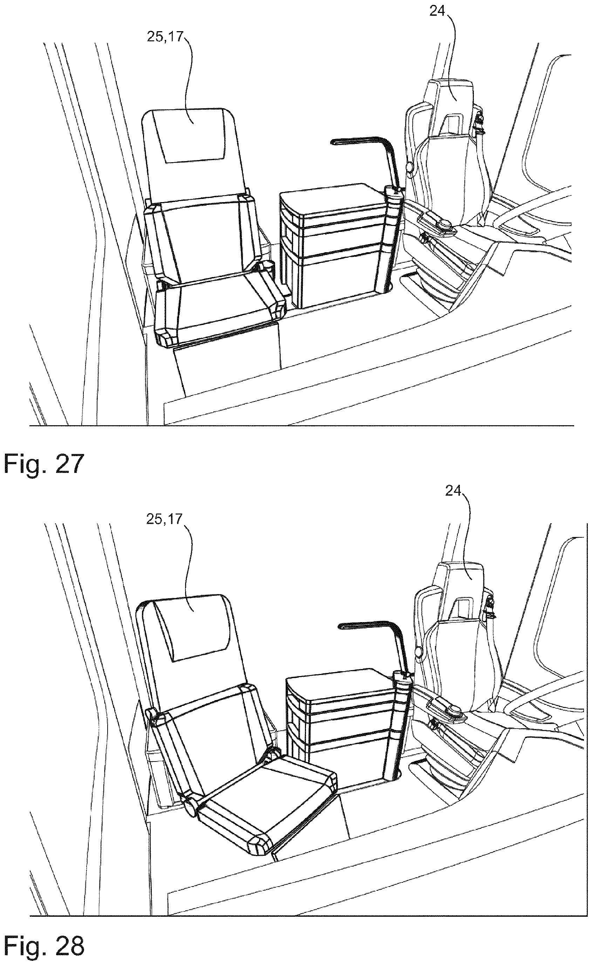

Wenn der Fahrer 40 eine Pause machen möchte, begibt er sich - wie aus den Figuren 26, 27, 28 und 29 ersichtlich - auf den ebenso schwenkbaren Beifahrersitz 25 in eine Kaffeepausenposition, indem er zu dem oberen Abschnitt 4a des Aufbewahrungsbehälters 4, der sich in ausgeschwenkter Stellung befindet, hinschwenkt. D.h. dass der Beifahrersitz 25 um den bereits bekannten Schwenkpunkt 7 derart geschwenkt wird, dass er zu dem Tisch 4a hingewandt ist.

Denkbar ist, dass sich gemäß Fig. 26 der Aufbewahrungsbehälter 4 in seiner zweiten Rastposition 58b befindet, in welcher er verdrehsicher gegenüber der Bodenfläche 30 fixierbar ist. Gezeigt ist, dass in dieser Position zwei Seitenflächen, bevorzugt die zwei längsten Seitenflächen des Aufbewahrungsbehälters 4, parallel zu einer Breitenrichtung 21b der Fahrzeugkabine 21 ausgerichtet sind. Denkbar ist aber auch, dass in der zweiten Rastposition 58a je zwei Seitenflächen unter einem Winkel von -15° bis 15°, bevorzugt parallel zur Breitenrichtung 21b angeordnet sind. Vorliegend ist der Aufbewahrungsbehälter 4 in einem hinteren Bereich der Fahrzeugkabine 21 angeordnet. Hinterer Bereich meint in diesem Zusammenhang, dass sich die Fahrzeugkabine 21 bezogen auf ihre Längsrichtung 21a gedanklich in einen vorderen, der Windschutzscheibe zugewandten Bereich und in einen hinteren Bereich teilen lässt, wobei beide Bereiche in etwa die Hälfte der Gesamtlänge der Fahrzeugkabine 21 einnehmen.

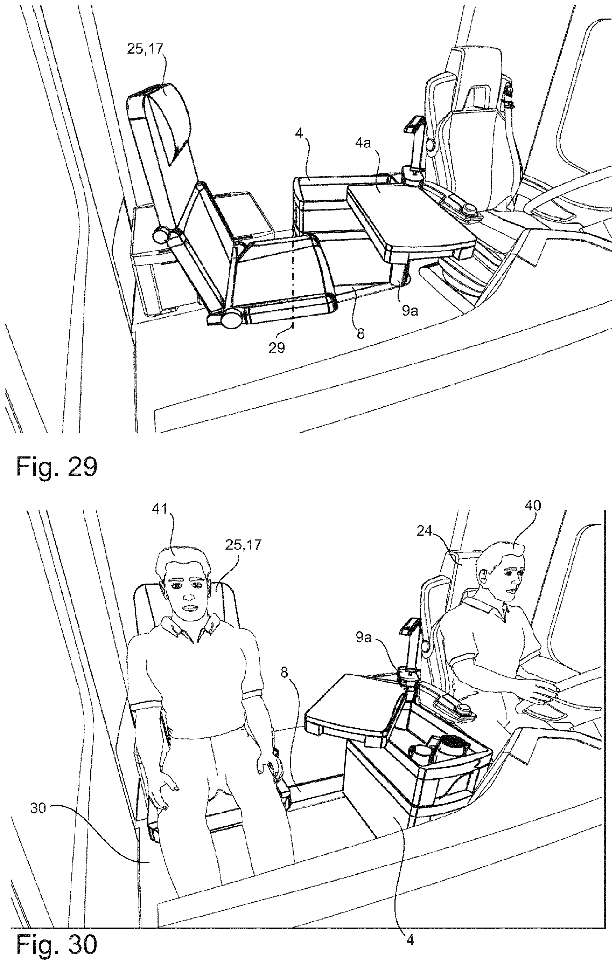

Zugleich kann der Tisch 4a um den Teleskoparm 9a herumgeschwenkt werden und dadurch von dem restlichen Aufbewahrungsbehälter 4 weggeschwenkt werden. Dies ist beispielsweise in Fig. 29 wiedergegeben. Die erfindungsgemäße Schwenkeinrichtung im Schwenkpunkt 7 beinhaltet somit nicht nur eine ortsfeste, stationäre Anordnung einer Schwenkachse, sondern auch verschiedene Schwenkarme, wie beispielsweise den Schwenkarm 8, an dem wiederum weitere Bauteile, wie der Aufbewahrungsbehälter 4, angeordnet sein können.

Der teleskopartige Arm 9a kann vorteilhaft Strom- oder Wasserleitungen, Hydraulik- und Pneumatikleitungen beinhalten, um entsprechend beispielsweise Wasseranschluss, Stromanschluss innerhalb des Aufbewahrungsbehälters 4 beispielsweise für die Kaffeemaschine 15 zu haben. Ebenso dient die Pneumatik/Elektrik/Hydraulik für das Auf- und Abwärtsfahren des Teleskoparms 9a.

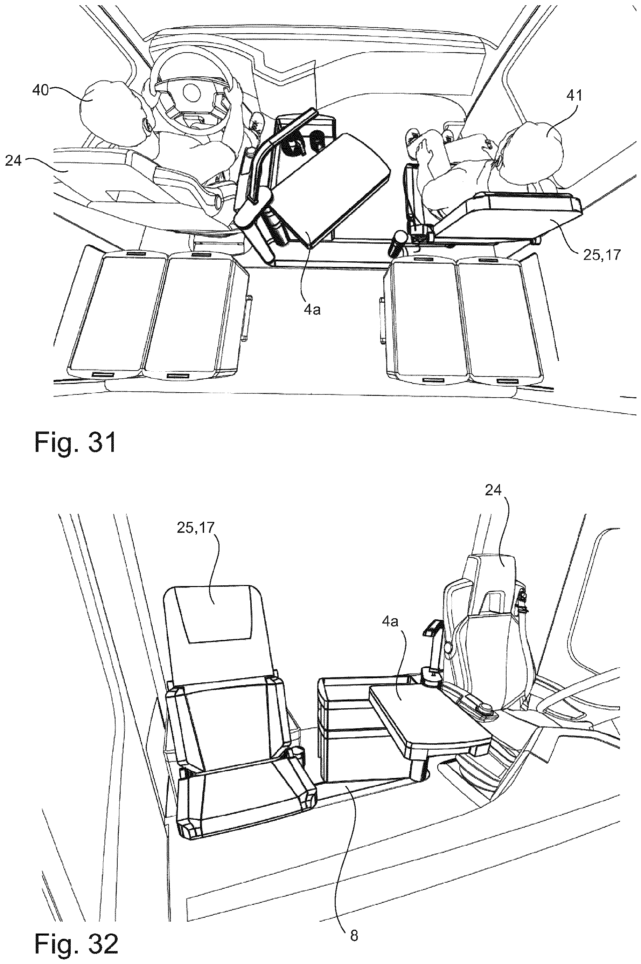

In Fig. 30 und 31 ist nochmals die Belegung beider Sitze 24, 25, also auch des Beifahrersitzes 25, mit verschwenktem Oberteil des Aufbewahrungsbehälters 4, welches als Tisch ausgebildet sein kann, dargestellt.

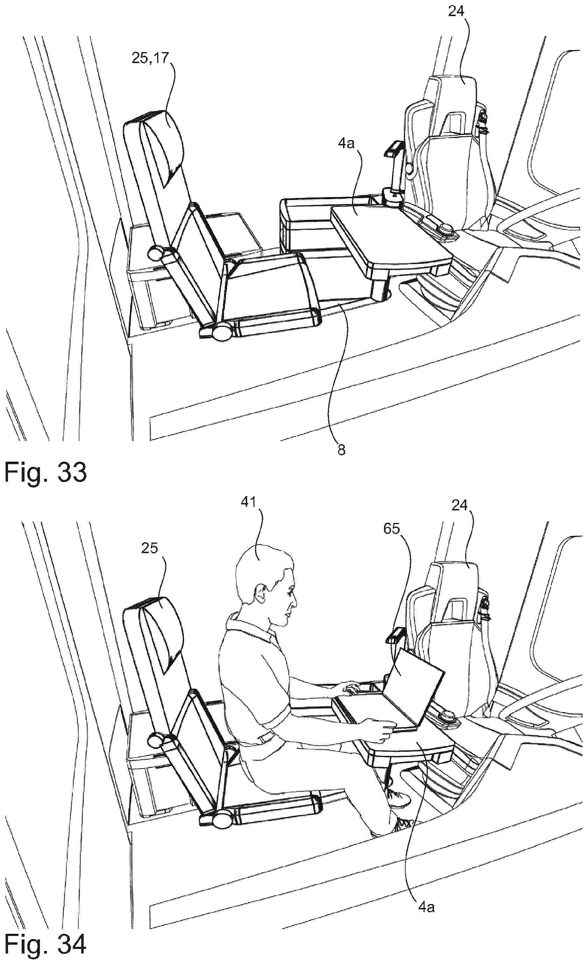

In den Figuren 32-35 ist die Benutzung des Tablets 65 durch den Beifahrer 41 wiedergegeben. Hierfür wird der Beifahrersitz 25 mittels der Schwenkeinrichtung in Richtung des Tisches 4a des Aufbewahrungsbehälters 4 geschwenkt und auf das sich auf dem Tisch 4a befindenden Tablet 65 bzw. Laptop von dem Beifahrer 41, gegebenenfalls auch während der Fahrt, bedient.

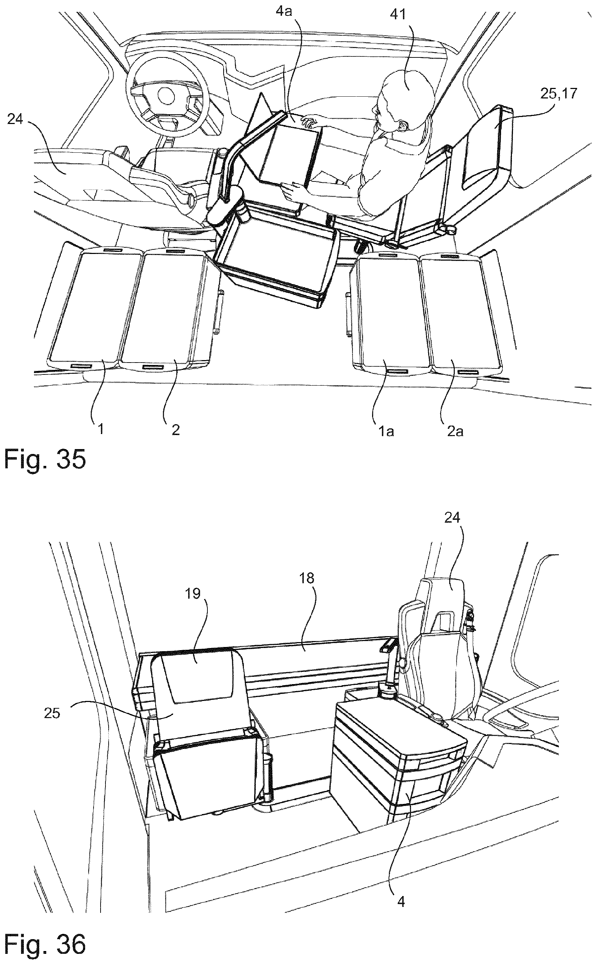

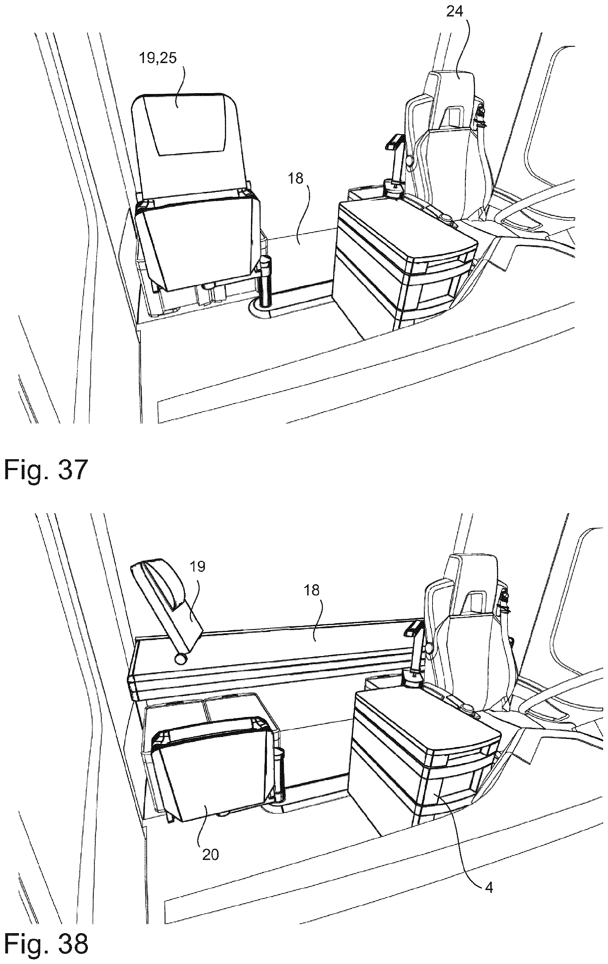

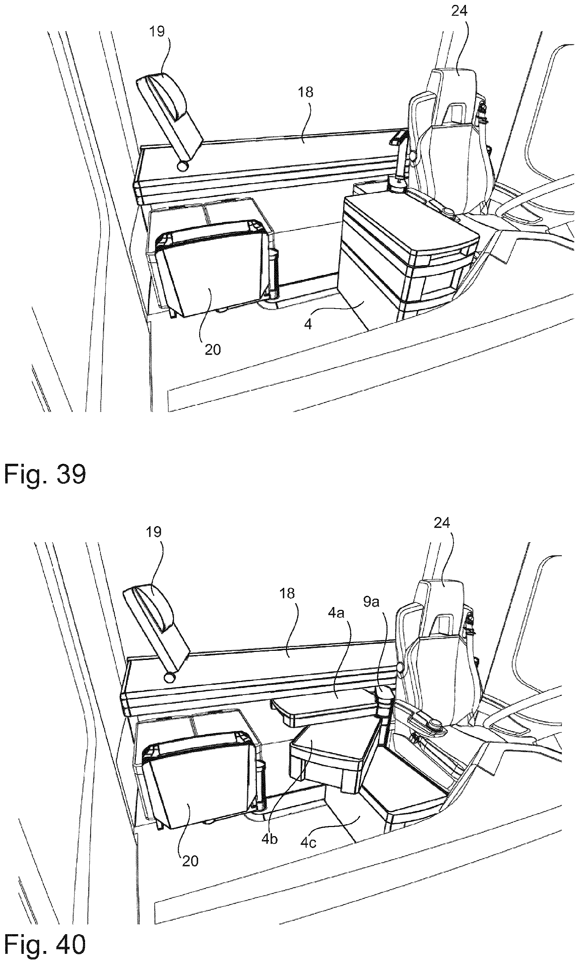

In den Figuren 36-39 ist dargestellt, wie der Beifahrersitz 25 entsprechend verändert werden kann, um dem Fahrer 40 oder dem Beifahrer 41 eine liegende Ruheposition im hinteren Teil der Fahrerkabine 21 zu ermöglichen. Gemäß Fig. 36 und 37 ist der Beifahrersitz 25 im zusammengeklappten Zustand gezeigt. In Fig. 38 ist erkennbar, dass das Oberteil 25a des zusammengeklappten Beifahrersitzes 25 erfindungsgemäß abgenommen werden kann und auf die Liegefläche 18 im hinteren Bereich der Fahrerkabine 21 abgestellt werden kann. Das Oberteil 19 des Beifahrersitzes 25, welches einen Teil der Rückenlehne darstellt, dient somit als Lehne für den Fahrer 40 oder Beifahrer 41, wie es in Fig. 39 im liegenden Zustand wiedergegeben ist. Zugleich wird der untere und somit restliche Teil 20 des Beifahrersitzes 25 im eingeklappten Zustand 11 unterhalb der Liegefläche 18 angeordnet. Dies ist in Fig. 38 dargestellt.

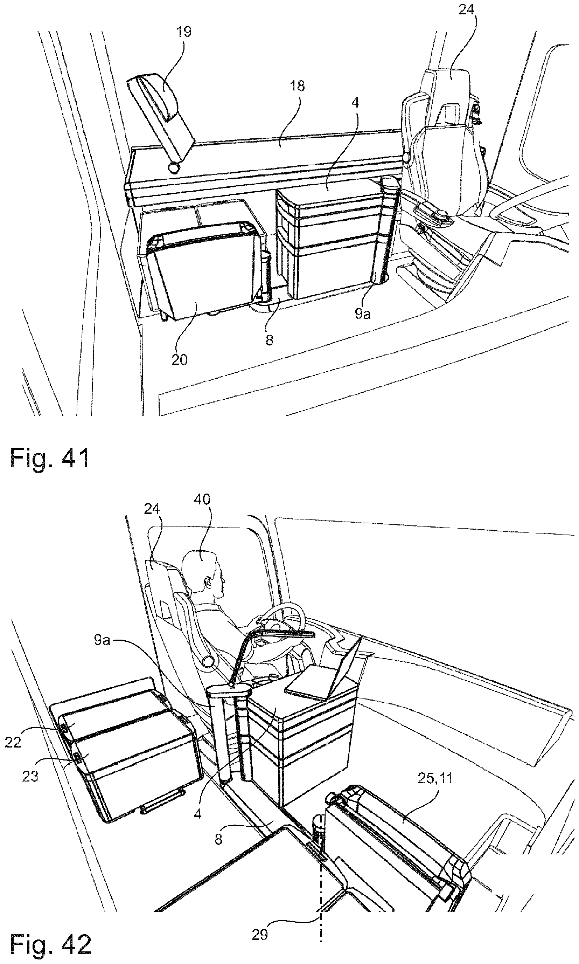

In Fig. 40, 41 und 42 wird nochmals die Abfahrt am nächsten Tag nach erfolgter Ruhepause dargestellt. Hierfür ist erfindungsgemäß der Teleskoparm 9a, der säulenartig ausgebildet ist, mit den einzelnen Teilen 4a, 4b und 4c des Aufbewahrungsbehälters 4 derart schwenkbar angeordnet, dass diese Teile 4a, 4b und 4c in ihrer dargestellten Form treppenartig bzw. wendeltreppenartig angeordnet werden können. Somit liegt der Aufbewahrungsbehälter 4in einem verschwenkten Zustand 53b vor. Hierdurch kann sich der auf der Liegefläche 18 befindende Mensch 40, 41 über die Treppe nach unten bewegen in den Fahrerkabinenraum. Anschließend kann gemäß Fig. 41 diese treppenartige Anordnung vollständig mittels des Schwenkmechanismus und der säulenartigen Anordnung 9a unterhalb der Liegefläche 18 wieder im Grundzustand 53a angeordnet werden, um in dem vorderen Bereich ausreichend Platz, zum Beispiel zu Anziehen mit Kleidern zu haben.

Im Anschluss daran befindet sich dann der Fahrer 40 wieder auf seinem Fahrersitz 24 und der Aufbewahrungsbehälter 4 wird mittels der Schwenksäule 9a wieder nach vorne verschwenkt, um so neben dem Fahrersitz 24 angeordnet zu sein. Somit kann wieder eine Bedienung des Tablets 65 und von ähnlichen Instrumenten, gegebenenfalls der Kaffeemaschine 15, stattfinden. Zugleich kann die rückseitig angeordnete Liegefläche 18 im eingeklappten Zustand, wie es beispielsweise in den Boxen 22 und 23 dargestellt ist, angeordnet sein, um im rückwärtigen Bereich mehr Raum zur Verfügung zu haben.

Damit kann der gezeigte Behälter 4 unter anderem als Aufbewahrungsbehälter, als Tisch bzw. Schreibtisch und als Treppe verwendet werden, was ihn als Multifunktionsbehälter auszeichnet.

Insgesamt ist das System durch seinen Schwenkmechanismus, die dadurch bedingte leichte Beladung mit entsprechenden Beladungshilfen und dem innovativen klappbaren Beifahrersitz sowie den Aufbewahrungsbehältern gekennzeichnet. Die in Leichtbauweise ausgebildeten einzelnen Elemente ermöglichen das Nutzen des Innenraumes einer Fahrerkabine in vielfältiger Weise durch die erfindungsgemäße Schwenkeinrichtung, die verschiedenen Schwenkarme, den klappbaren Beifahrersitz und durch die innovativen einzelnen Bauteile, wie Aufbewahrungsbehälter, kann der Innenraum immer wieder neu und vorteilhaft sowie raumsparend gestaltet werden.

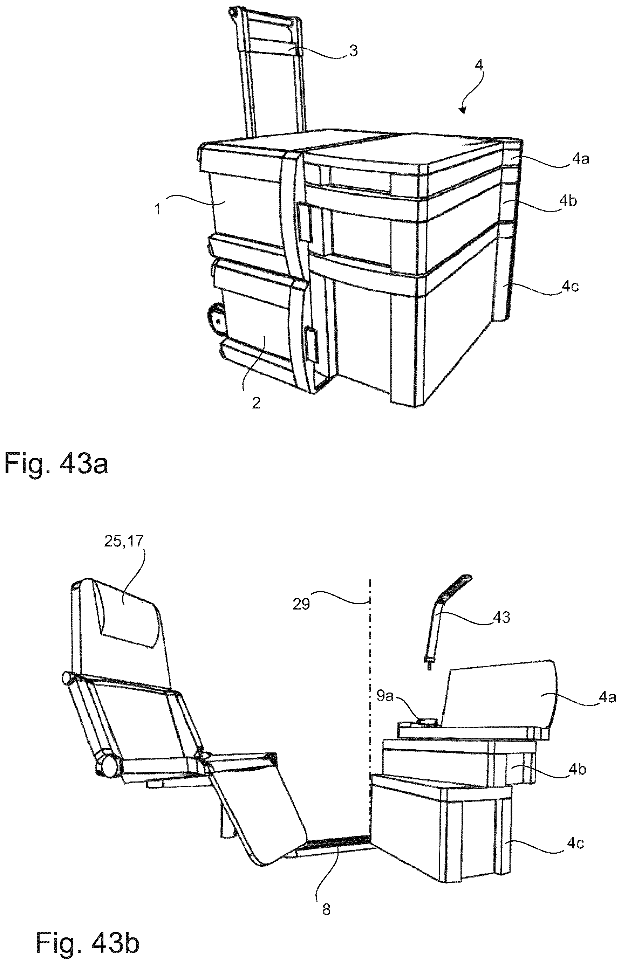

Die einzelnen Bauteile sind nochmals in Fig. 43a und 43b separat dargestellt.

Fig. 44 zeigt eine mögliche Ausführung des erfindungsgemäßen Aufbewahrungsbehälters 4, welcher aus drei in Höhenrichtung 4z des Aufbewahrungsbehälters 4 aufeinanderfolgend angeordneten Abschnitten 4a, 4b, 4c aufgebaut und an einer Drehachse 27a angeordnet ist. Mittels hier nur beispielhaft dargestellter Clipsverbindungen 64a, 64b kann ein Abschnitt 4a, 4b, 4c mit dem anderen 4a, 4b, 4c verbunden werden. Gezeigt ist allerdings eine Ausführung, bei der die Abschnitte 4a, 4b, 4c jeweils nicht miteinander verbunden und zusätzlich axial beabstandet zueinander angeordnet sind.

Zusätzlich gezeigt ist, dass die Abschnitte 4a, 4b, 4c um die Drehachse 27a gegeneinander horizontal verschwenkt angeordnet sind. Im vorliegenden Fall ist der Abschnitt 4b gegenüber den Abschnitten 4a und 4c um 180°verschwenkt angeo rdnet.

Die Abschnitte 4a, 4b, 4c weisen jeweils einen ersten mit der Drehachse 27a verbundenen hülsenförmigen Unterabschnitt 54a, 55a, 56a und einen zweiten annähernd quaderförmigen Unterabschnitt 54b, 55b, 56b auf. Zwischen dem ersten Unterabschnitt 54a, 56a und dem zweiten Unterabschnitt 54b, 56b der Abschnitte 4a, 4c ist eine Gelenkverbindung 60a in Form eines Kugelgelenks angeordnet, während zwischen dem ersten Unterabschnitt 55a und dem zweiten Unterabschnitt 55b des Abschnitts 4b eine Gelenkverbindung 60b in Form eines Drehmomentscharniers angeordnet ist.

Mittels der Kugelgelenkverbindung 60a ist es möglich, dass wie gezeigt der Unterabschnitt 54b gegenüber dem Unterabschnitt 54a um eine horizontale Achse um beispielsweise 90° verschwenkt wird. Damit kann ein (nicht gezeigter) Fahrer 40 beispielsweise das im Unterabschnitt 54b angeordnete Tablet 65 bedienen. Dieses Tablet 65 ist beispielsweise mittels einer nicht gezeigten Clipsverbindung am Unterabschnitt 54b abnehmbar befestigt.

Anhand des untersten Abschnitts 4c ist beispielhaft ein Deckel 61 gezeigt, mittels welcher der boxähnliche Abschnitt 4c verschlossen werden kann.

Der Unterabschnitt 55a weist vorliegend eine zur Längserstreckung 27az der Drehachse 27a senkrecht angeordnete Bohrung 63c auf, welche mit einer in der Drehachse 27a angeordneten Aussparung 62 (nicht sichtbar) in Deckung bringbar ist. Zusätzlich ist ein Tragstift 63 durch die Bohrung 63c und die Aussparung 62 hindurchgehend angeordnet. Die Aussparung 62, durch die der Tragstift 63 hindurchgeht, entspricht beispielsweise in Form und Funktion den ebenfalls in der Drehachse 27a angeordneten Aussparungen 62, welche sowohl in axialer als auch in radialer Richtung der Drehachse 27a angeordnet sind.

Der Unterabschnitt 56a kann gegenüber der Drehachse 27a analog zum Unterabschnitt 55a gesichert werden. Vorliegend ist alternativ ein umlaufender ringförmiger Absatz 64 an der Drehachse 27a angeordnet, welcher beispielsweise auf die Drehachse 27a geschraubt oder geschweißt ist und zur axialen Sicherung des Unterabschnitts 56a dient.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1, 1a, 2, 2a, 4: Aufbewahrungsbehälter
- 3: Gepäcktransportwagen
- 4a, 4b, 4c: Abschnitte
- 4z: Höhenrichtung
- 5,6: Klappverbindungen
- 7: Schwenkpunkt
- 8, 28: Schwenkarme
- 8a, 8b: Endabschnitte
- 8c: Längserstreckungsrichtung
- 9b, 9c: stangenartige Elemente
- 9a1, 9b1, 9c1, 36a: oberer Endabschnitt
- 9a2, 9b2: unterer Endabschnitt
- 9a: Teleskoparm
- 9': Längserstreckungsrichtung
- 10: Eingreifeinrichtung
- 11: Beifahrersitz, eingeklappt
- 12: Ladungsluke
- 13, 14: Hakenelemente
- 15: Kaffeemaschine
- 16: Cupholder
- 17: Beifahrersitz, ausgeklappt
- 18: Liegefläche
- 19: Oberteil
- 20: restlicher Teil
- 21: Fahrerkabine
- 22, 23: Box
- 24: Fahrersitz
- 25: Beifahrersitz
- 25a: Oberteil
- 25b: Rückenlehne
- 25c: Sitzteil
- 25d: Fußteil
- 26: Schwenkeinrichtung
- 27a, 27b: Drehachse
- 29: Längsachse
- 30: Bodenfläche
- 31: Verbindungselement
- 32a: Grundzustand
- 32b: ausgefahrener Zustand
- 33a: Ausfahrbewegung
- 33b: Einfahrbewegung
- 34: Leitungen
- 35a, 35b, 35c: Achsen
- 36: Funktionsdrehsäule
- 37a: Grundzustand
- 37b: ausgefahrener Zustand
- 38: Teleskopvorrichtung
- 39: Deckenfläche
- 40: Fahrer
- 41: Beifahrer
- 42a, b, c, d: hohlzylindrische Abschnitte
- 43: Schwenkstangenelement
- 44: Aussparung
- 45: Gelenkverbindung
- 46: Pumpe
- 47: Vorratsbehälter
- 48: Antriebseinrichtung
- 49: Steckverbindung
- 50: Lager
- 51: Trägerelement
- 52: Gleitschicht
- 53a: Grundzustand
- 53b: verschwenkter Zustand
- 54a, b: Unterabschnitt
- 55a, b: Unterabschnitt
- 56a, b: Unterabschnitt
- 57: Gelenkverbindung
- 58a, b: Rastposition
- 59a: außerhalb des Innenraums
- 59b: innerhalb des Innenraums
- 60a, 60b: Gelenkverbindung
- 61: Deckel
- 62: Abschnitt
- 63a, 63b: Clipsverbindung
- 63: Tragstift
- 63c: Bohrung
- 64: Absatz
- 65: Tablet

## Patentansprüche

1. Fahrerkabine (21) eines Nutzfahrzeugs,
umfassend einen Aufbewahrungsbehälter (4), welcher dazu eingerichtet ist, außerhalb (59a) der Fahrerkabine (21) und innerhalb eines Innenraums (59b) der Fahrerkabine (21) mobil positioniert und von außerhalb (59a) der Fahrerkabine (21) in den Innenraum (59b) der Fahrerkabine (21) mittels eines Liftsystems automatisch transportiert zu werden, wobei der Aufbewahrungsbehälter (4) mit einer unmittelbar mit einer Bodenfläche (30) der Fahrerkabine (21) befestigbaren und um eine Vertikalachse schwenkbaren ersten Drehachse (27a) zur Durchführung einer Schwenkbewegung mechanisch fest verbindbar ist, wobei die erste Drehachse (27a) mit einer dritten Drehachse (9b) verbindbar ist, wobei der Aufbewahrungsbehälter (4) mit einer um die dritte Drehachse (9b) schwenkbar angeordneten zweiten Drehachse (9c) verbindbar ist, wobei die erste (27a), die zweite (9c) und die dritte Drehachse (9b) jeweils senkrecht zur Bodenfläche (30) angeordnet sind, wobei **dass** obere Endabschnitte (9c1, 9b1) der zweiten (9c) und der dritten Drehachse (9b) auf gleicher Höhe miteinander angeordnet und mittels eines Verbindungselements (31) miteinander verbunden sind.

2. Fahrerkabine (21) nach Anspruch 1,
**dadurch gekennzeichnet, dass**
zwischen der ersten Drehachse (27a) und der zweiten (9c) oder der dritten Drehachse (9b) ein parallel zur Bodenfläche (30) angeordneter Schwenkarm (8) angeordnet ist.

3. Fahrerkabine (21) nach Anspruch 1 oder 2,
**dadurch gekennzeichnet, dass**
der Aufbewahrungsbehälter (4) gegenüber der Bodenfläche (30) in mindestens zwei Rastpositionen (58a, 58b) verdrehsicher fixierbar ist.

4. Fahrerkabine (21) nach einem der vorhergehenden Ansprüche,
**dadurch gekennzeichnet, dass**
der Aufbewahrungsbehälter (4) mittels einer Befestigungseinrichtung (10) mittels Kraftschluss und/ oder Formschluss mit der ersten (27a), der zweiten (9c) oder der dritten Drehachse (9b) verbindbar ist.

5. Fahrerkabine (21) nach einem der vorhergehenden Ansprüche,
**dadurch gekennzeichnet, dass**
die zweite Drehachse (9c) mittels eines Teleskoparms (9a) ausgebildet ist, welcher von einem nicht-ausgefahrenen Grundzustand (32a) bis zu einem maximal ausgefahrenen Zustand (32b) mittels einer Ausfahrbewegung (33a) teleskopartig ausfahrbar ist.

6. Fahrerkabine (21) nach einem der vorhergehenden Ansprüche,
**dadurch gekennzeichnet, dass**
der Aufbewahrungsbehälter (4) aus mindestens drei in Höhenrichtung (4z) des Aufbewahrungsbehälters (4) aufeinanderfolgend angeordneten Abschnitten (4a, 4b, 4c) aufgebaut ist.

7. Fahrerkabine (21) nach Anspruch 6,
**dadurch gekennzeichnet, dass**
die Abschnitte (4a, 4b, 4c) um die mindestens eine Drehachse (27a, 9a, 9b, 9c) gegeneinander jeweils um 360° von einem geschlossenen Grundzustand (53a) zu einem aufgefächerten Zustand (53b) des Aufbewahrungsbehälters (4) horizontal verschwenkbar und/oder wendeltreppenartig anordenbar sind.

8. Fahrerkabine (21) nach einem der Ansprüche 6 oder 7,
**dadurch gekennzeichnet, dass**
die Abschnitte (4a, 4b, 4c) entlang der mindestens einen Drehachse (27a, 9a, 9b, 9c) in axialer Richtung zueinander verschiebbar angeordnet sind.

9. Fahrerkabine (21) nach einem der Ansprüche 6-8,
**dadurch gekennzeichnet, dass**
die Abschnitte (4a, 4b, 4c) jeweils einen ersten mit der mindestens einen Drehachse (27a, 9a, 9b, 9c) verbindbaren hülsenförmigen Unterabschnitt (54a, 55a, 56a) umfassen, wobei zwischen dem ersten (54a, 55a, 56a) Unterabschnitt und einem zweiten Unterabschnitt (54b, 55b, 56b) der Abschnitte (4a, 4b, 4c) eine Gelenkverbindung (60a, 60b), bevorzugt eine Kugelgelenkverbindung, angeordnet ist.

10. Fahrerkabine (21) nach Anspruch 9,
**dadurch gekennzeichnet, dass**
die ersten Unterabschnitte (54a, 55a, 56a) jeweils mindestens eine zur Längserstreckung (27az) der mindestens einen Drehachse (27a, 9a, 9b, 9c) senkrecht angeordnete Bohrung (61) aufweisen, welche mit in der Drehachse (27a, 9a, 9b, 9c) angeordneten Aussparungen (62) in Deckung bringbar sind, wobei ein Tragstift (63) durch die Bohrungen und die Aussparungen (63) hindurchgehend anordenbar ist.

11. Fahrerkabine (21) nach einem der Ansprüche 6-10,
**dadurch gekennzeichnet, dass**
von den in Höhenrichtung des Aufbewahrungsbehälters (4) aufeinanderfolgend angeordneten Abschnitten (4a, 4b, 4c) ein erster, oberer Abschnitt (4a) als Arbeitsfläche, insbesondere als Ess- und/oder Arbeitsfläche, für einen Fahrer (40) und/oder Beifahrer (41) der Fahrerkabine ausgebildet ist und/oder ein Tablet an dem ersten Abschnitt (4a) angeordnet ist.

12. Fahrerkabine (21) nach einem der Ansprüche 6-11,
**dadurch gekennzeichnet, dass**
von den in Höhenrichtung des Aufbewahrungsbehälters (4) aufeinanderfolgend angeordneten Abschnitten (4a, 4b, 4c) ein zweiter, mittlerer Abschnitt (4b) als Aufbewahrungsabschnitt, insbesondere für aufzubewahrende Dokumente wie Frachtpapiere, ausgebildet ist.

13. Fahrerkabine (21) nach einem der Ansprüche 6-12,
**dadurch gekennzeichnet, dass**
von den in Höhenrichtung des Aufbewahrungsbehälters (4) aufeinanderfolgend angeordneten Abschnitten (4a, 4b, 4c) ein dritter, unterer Abschnitt (4c) als Aufbewahrungsabschnitt, insbesondere für eine Kaffeemaschine (15), für einen Cup-Holder mit einer Kaffeekanne (16) und/oder für eine aktive Kühlbox für Kaltgetränke, ausgebildet ist.

14. Fahrerkabine (21) nach einem der vorhergehenden Ansprüche,
**dadurch gekennzeichnet, dass**
der Aufbewahrungsbehälter (4) zwischen einem Fahrersitz (24) und einem Beifahrersitz (25) der Fahrerkabine (21) und/oder in einem hinteren Bereich der Fahrerkabine (21) anordenbar ist.

## Claims

1. Driver's cab (21) of a commercial vehicle,
comprising a storage container (4) which is designed to be positioned in a movable manner outside (59a) the driver's cab (21) and within an interior (59b) of the driver's cab (21) and to be automatically transported from the outside (59a) of the driver's cab (21) into the interior (59b) of the driver's cab (21) by means of a lifting system, wherein the storage container (4) can be mechanically rigidly connected to a first axis of rotation (27a) in order to perform a pivoting movement, said axis of rotation being able to be fixed directly to a floor surface (30) of the driver's cab (21) and being pivotable about a vertical axis, wherein the first axis of rotation (27a) can be connected to a third axis of rotation (9b), wherein the storage container (4) can be connected to a second axis of rotation (9c) which is arranged so as to be pivotable about the third axis of rotation (9b), wherein the first (27a), the second (9c) and the third (9b) axes of rotation are each arranged perpendicularly to the floor surface (30), and wherein
upper end portions (9c1, 9b1) of the second (9c) and the third axis of rotation (9b) are arranged so as to be at the same height and are interconnected by means of a connecting element (31).

2. Driver's cab (21) according to claim 1,
**characterised in that**
a swivel arm (8) that is arranged in parallel with the floor surface (30) is arranged between the first axis of rotation (27a) and the second (9c) or the third axis of rotation (9b).

3. Driver's cab (21) according to either claim 1 or claim 2,
**characterised in that**
the storage container (4) can be fixed in at least two latching positions (58a, 58b) so as to be resistant to rotation with respect to the floor surface (30).

4. Driver's cab (21) according to any of the preceding claims,
**characterised in that**
the storage container (4) can be connected to the first (27a), the second (9c) or the third axes of rotation (9b) by means of a non-positive and/or positive connection, by means of a fastening device (10).

5. Driver's cab (21) according to any of the preceding claims,
**characterised in that**
the second axis of rotation (9c) is formed by means of a telescope arm (9a) which can be extended telescopically from a non-extended initial state (32a) to a maximally extended state (32b) by means of an extension movement (33a).

6. Driver's cab (21) according to any of the preceding claims,
**characterised in that**
the storage container (4) is formed of at least three portions (4a, 4b, 4c) that are arranged in succession in the height direction (4z) of the storage container (4).

7. Driver's cab (21) according to claim 6,
**characterised in that**
the portions (4a, 4b, 4c) can be arranged so as to each be pivotable horizontally about the at least one axis of rotation (27a, 9a, 9b, 9c) and away from one another by 360° from a closed initial state (53a) into an unfolded state (53b) of the storage container (4), and/or can be arranged in the shape of a spiral staircase.

8. Driver's cab (21) according to either claim 6 or claim 7,
**characterised in that**
the portions (4a, 4b, 4c) are arranged along the at least one axis of rotation (27a, 9a, 9b, 9c) so as to be movable relative to one another in the axial direction.

9. Driver's cab (21) according to any of claims 6-8,
**characterised in that**
the portions (4a, 4b, 4c) each comprise a first sleeve-shaped sub-portion (54a, 55a, 56a) which can be connected to the at least one axis of rotation (27a, 9a, 9b, 9c), a joint (60a, 60b), preferably a ball-and-socket joint, being arranged between the first (54a, 55a, 56a) sub-portion and a second (54b, 55b, 56b) sub-portion of the portions (4a, 4b, 4c).

10. Driver's cab (21) according to claim 9,
**characterised in that**
the first sub-portions (54a, 55a, 56a) each have at least one hole (61) that is arranged perpendicularly to the longitudinal extension (27az) of the at least one axis of rotation (27a, 9a, 9b, 9c), which hole can be brought into alignment with recesses (62) arranged in the axis of rotation (27a, 9a, 9b, 9c), it being possible for a support pin (63) to be arranged so as to pass through the holes and the recesses (63).

11. Driver's cab (21) according to any of claims 6-10,
**characterised in that**
a first, upper portion (4a) of the portions (4a, 4b, 4c) arranged in succession in the height direction of the storage container (4) is designed as a work surface, in particular as an eating and/or work surface, for a driver (40) and/or a passenger (41) of the driver's cab, and/or **in that** a tray is arranged at the first portion (4a).

12. Driver's cab (21) according to any of claims 6-11,
**characterised in that**
a second, middle portion (4b) of the portions (4a, 4b, 4c) arranged in succession in the height direction of the storage container (4) is designed as a storage portion, in particular for documents to be stored, such as freight documents.

13. Driver's cab (21) according to any of claims 6-12,
**characterised in that**
a third, lower portion (4c) of the portions (4a, 4b, 4c) arranged in succession in the height direction of the storage container (4) is designed as a storage portion, in particular for a coffee machine (15), for a cup-holder comprising a coffee pot (16) and/or for an active coolbox for cold drinks.

14. Driver's cab (21) according to any of the preceding claims,
**characterised in that**
the storage container (4) can be arranged between a driver's seat (24) and a passenger seat (25) of the driver's cab (21) and/or in a rear region of the driver's cab (21).

## Revendications

1. Cabine de conduite (21) d'un véhicule utilitaire,
comportant un conteneur de rangement (4), lequel est conçu de façon à être positionné mobile à l'extérieur (59a) de la cabine de conduite (21) et à l'intérieur d'un espace intérieur (59b) de la cabine de conduite (21) et transporté automatiquement de l'extérieur (59a) de la cabine de conduite (21) dans l'espace intérieur (59b) de la cabine de conduite (21) au moyen d'un système élévateur, le conteneur de rangement (4) étant apte à être relié de manière fixe mécaniquement avec un premier axe de rotation (27a) apte à être fixé directement avec une surface au sol (30) de la cabine de conduite (21) et apte à pivoter autour d'un axe vertical pour la réalisation d'un mouvement de pivotement, le premier axe de rotation (27a) étant apte à être relié à un troisième axe de rotation (9b), le conteneur de rangement (4) étant apte à être relié à un deuxième axe de rotation (9c) disposé apte à pivoter autour du troisième axe de rotation (9b), le premier (27a), le deuxième (9c) et le troisième axe de rotation (9b) étant disposés chacun perpendiculairement à la surface au sol (30),
des parties d'extrémité supérieures (9c1, 9b1) du deuxième (9c) et du troisième axe de rotation (9b) étant disposées à la même hauteur entre elles et reliées ensemble au moyen d'un élément de liaison (31).

2. Cabine de conduite (21) selon la revendication 1,
**caractérisée par le fait que**
un bras pivotant (8) disposé parallèlement à la surface au sol (30) est disposé entre le premier axe de rotation (27a) et le deuxième (9c) ou le troisième axe de rotation (9b).

3. Cabine de conduite (21) selon l'une des revendications 1 ou 2,
**caractérisée par le fait que**
le conteneur de rangement (4) est apte à être fixé bloqué en rotation par rapport à la surface au sol (30) dans au moins deux positions d'encliquetage (58a, 58b).

4. Cabine de conduite (21) selon l'une des revendications précédentes,
**caractérisée par le fait que**
le conteneur de rangement (4) est apte à être relié au premier (27a), au deuxième (9c) ou au troisième axe de rotation (9b) au moyen d'un dispositif de fixation (10) utilisant une adhérence et/ou une fermeture géométrique.

5. Cabine de conduite (21) selon l'une des revendications précédentes,
**caractérisée par le fait que**
le deuxième axe de rotation (9c) est formé au moyen d'un bras télescopique (9a), lequel est apte à être déployé de façon télescopique à partir d'un état de base non déployé (32a) jusqu'à un état déployé au maximum (32b) au moyen d'un mouvement de déploiement (33a).

6. Cabine de conduite (21) selon l'une des revendications précédentes,
**caractérisée par le fait que**
le conteneur de rangement (4) est construit à partir d'au moins trois parties (4a, 4b, 4c) disposées successivement dans la direction verticale (4z) du conteneur de rangement (4).

7. Cabine de conduite (21) selon la revendication 6,
**caractérisée par le fait que**
les parties (4a, 4b, 4c) sont aptes à être disposées aptes à pivoter horizontalement autour dudit au moins un axe de rotation (27a, 9a, 9b, 9c) l'une par rapport à l'autre chacune de 360° d'un état de base fermé (53a) à un état déployé (53b) du conteneur de rangement (4), et/ou à la manière d'un escalier en colimaçon.

8. Cabine de conduite (21) selon l'une des revendications 6 ou 7,
**caractérisée par le fait que**
les parties (4a, 4b, 4c) sont disposées aptes à être déplacées l'une par rapport à l'autre dans une direction axiale le long dudit au moins un axe de rotation (27a, 9a, 9b, 9c).

9. Cabine de conduite (21) selon l'une des revendications 6-8,
**caractérisée par le fait que**
les parties (4a, 4b, 4c) comportent chacune une première sous-partie (54a, 55a, 56a) en forme de manchon apte à être reliée audit au moins un axe de rotation (27a, 9a, 9b, 9c), une liaison articulée (60a, 60b), de préférence une liaison d'articulation à rotule, étant disposée entre la première sous-partie (54a, 55a, 56a) et une seconde sous-partie (54b, 55b, 56b) des parties (4a, 4b, 4c).

10. Cabine de conduite (21) selon la revendication 9,
**caractérisée par le fait que**
les premières sous-parties (54a, 55a, 56a) présentent chacune au moins un alésage (61) disposé perpendiculairement à l'extension longitudinale (27az) dudit au moins un axe de rotation (27a, 9a, 9b, 9c), qui sont aptes à être amenés en coïncidence avec des cavités (62) disposées dans l'axe de rotation (27a, 9a, 9b, 9c), une broche de support (63) étant apte à être disposée à travers les alésages et les cavités (63).

11. Cabine de conduite (21) selon l'une des revendications 6-10,
**caractérisée par le fait que**
une première partie, supérieure (4a) est réalisée en tant que surface de travail, en particulier en tant que surface de repas et/ou surface de travail, pour un conducteur (40) et/ou un passager (41) de la cabine de conduite à partir des parties (4a, 4b, 4c) disposées successivement dans la direction verticale du conteneur de rangement (4) et/ou une tablette est disposée sur la première partie (4a).

12. Cabine de conduite (21) selon l'une des revendications 6-11,
**caractérisée par le fait que**
une seconde partie, intermédiaire (4b) est réalisée en tant que partie de rangement, en particulier pour des documents à ranger comme des documents de fret à partir des parties (4a, 4b, 4c) disposées successivement dans la direction verticale du conteneur de rangement (4).

13. Cabine de conduite (21) selon l'une des revendications 6-12,
**caractérisée par le fait que**
une troisième partie, inférieure (4c) est réalisée en tant que partie de rangement, en particulier pour une machine à café (15), pour un porte-gobelet avec un pot à café (16) et/ou pour une glacière active pour boissons froides à partir des parties (4a, 4b, 4c) disposées successivement dans la direction verticale du conteneur de rangement (4).

14. Cabine de conduite (21) selon l'une des revendications précédentes,
**caractérisée par le fait que**
le conteneur de rangement (4) est apte à être disposé entre un siège de conduite (24) et un siège de passager (25) de la cabine de conduite (21) et/ou dans une zone arrière de la cabine de conduite (21).
